# EUROPÄISCHE PATENTSCHRIFT

(11) **EP 3 666 516 B1**
(45) Veröffentlichungstag und Bekanntmachung des Hinweises auf die Patenterteilung: **26.01.2022**
(21) Anmeldenummer: 19213053.2
(22) Anmeldetag: 03.12.2019
(51) Int. Cl.: B32B 1/08, B32B 25/04, B32B 25/14, C08L 23/16, F16L 11/08

(54) **FLUIDLEITUNG ZUM LEITEN EINES FLUIDS**
FLUID CONDUIT FOR GUIDING A FLUID
CONDUITE DESTINÉE À CONDUIRE UN FLUIDE

(30) Priorität: 12.12.2018 DE 102018131917
(43) Veröffentlichungstag der Anmeldung: 17.06.2020
(73) Patentinhaber: VERITAS AG, 63571 Gelnhausen (DE)
(72) Erfinder: VAN HOOREN, Marc, 63579 Freigericht (DE); FINK, Hans-Joachim, 61130 Nidderau (DE)
(74) Vertreter: Patentship Patentanwaltsgesellschaft mbH

(56) Entgegenhaltungen:
- WO-A1-2012/146441
- DE-A1-102009 060 065
- DE-A1-102010 000 180
- DE-A1-102013 103 759

## Beschreibung

Die vorliegende Erfindung betrifft eine Fluidleitung zum Leiten eines Fluids, insbesondere eine Fluidleitung in einem Fahrzeug zum Leiten eines Fluids.

In einem Fahrzeug wird eine Vielzahl von Fluidleitungen verwendet, um ein Fluid zu transportieren. Um die Temperatur einer elektrischen Fahrzeugbatterie eines Elektrofahrzeuges konstant zu halten, werden beispielsweise Wärmetauscher verwendet, welche von einem Fluid durchströmt werden, wobei das Fluid durch eine Fluidleitung dem Wärmetauscher zugeführt, bzw. durch eine Fluidleitung von dem Wärmetauscher abgeführt wird.

Fluidleitungen können auch zum Zuführen, bzw. Abführen von Fluid zu bzw. von einer Motorkühlvorrichtung zum Kühlen eines Verbrennungsmotors eines Kraftfahrzeuges, zu bzw. von einer Fluideinspritzvorrichtung zum Einspritzen von Fluid in einen Verbrennungsmotor eines Kraftfahrzeuges, zu bzw. von einer Abgasreinigungsvorrichtung zum Reinigen eines Abgasstroms eines Verbrennungsmotors eines Kraftfahrzeuges verwendet werden.

In der DE 10 2013 103 759 A1 ist ein Schlauch mit einer Innenschicht als Sperrschicht und einer Außenschicht aus einer vernetzten Kautschukmischung offenbart.

In der DE 10 2009 060 065 B4 ist eine aus TPV bestehende Fluidleitung zum Befüllen, Entgasen oder Entleeren eines Behälters, der zur Aufnahme einer Harnstoff-enthaltenen Flüssigkeit geeignet ist, sowie zum Transport einer Harnstoff-enthaltenen Flüssigkeit offenbart.

Die Druckschrift WO 2012/146441 A1 beschreibt einen Kühlmittelschlauch.

Die Druckschrift DE 10 2010 000 180 A1 beschreibt einen hochfesten textilen Hochdruckschlauch.

Bei herkömmlichen aus TPV bestehenden Fluidleitungen kann unter Umständen der Nachteil auftreten, dass in der TPV-Fluidleitung vorhandene Bestandteile des Materials aus der Fluidleitung ausgewaschen und in dem Fluid angereichert werden, wobei die im Fluid angereicherten Bestandteile in fluidtechnisch angeschlossenen Fahrzeugbauteilen zu unerwünschten Nebeneffekten führen können.

Es ist die der Erfindung zugrundeliegende Aufgabe, eine Fluidleitung für ein Fahrzeug bereitzustellen, welche eine vorteilhafte chemische und mechanische Widerstandsfähigkeit aufweist.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Fluidleitung zum Leiten eines Fluids gelöst, mit einer Sperrschicht, welche einen Leitungsinnenraum der Fluidleitung zum Leiten des Fluids begrenzt, wobei die Sperrschicht ausgebildet ist, eine Diffusion des Fluids durch die Sperrschicht zu reduzieren, wobei die Sperrschicht ein peroxidisch vernetztes thermoplastisches Elastomer-Vulkanisat (TPE-V) umfasst.

Dadurch wird beispielsweise der technische Vorteil erreicht, dass eine Fluidleitung bereitgestellt werden kann, welche eine wirksame chemische Beständigkeit gegenüber Fluid, insbesondere gegenüber wässrigen Flüssigkeiten, aufweist, welches durch den Leitungsinnenraum der Fluidleitung geleitet wird.

Die Sperrschicht umfasst ein thermoplastisches Elastomer-Vulkanisat, welches abgekürzt als TPE-V, bzw. TPV bezeichnet wird, und grenzt die Fluidleitung gegenüber dem Leitungsinnenraum der Fluidleitung ab, so dass eine Diffusion des Fluids durch die Sperrschicht reduziert, bzw. verhindert werden kann. Dadurch kann sichergestellt werden, dass Fluide, welche durch die Fluidleitung geleitet werden, die Fluidleitung nicht beschädigen.

Thermoplastische Elastomer-Vulkanisate (TPE-V) sind Kunststoffe, bei denen zumindest ein Elastomer, z.B. Ethylen-Propylen-Dien-Kautschuk (EPDM), in eine Thermoplast-Matrix, z.B. Polypropylen (PP), eingebunden ist, und Elastomer und Thermoplast-Matrix durch einen Vulkanisierungsvorgang miteinander chemisch vernetzt werden. Die Thermoplast-Matrix des thermoplastischen Elastomer-Vulkanisats stellt hierbei eine vorteilhafte Härte und Widerstandsfähigkeit bei erhöhten Temperaturen sicher, wohingegen das Elastomer eine Elastizität des thermoplastischen Elastomer-Vulkanisats sicherstellt.

Somit vereinigen thermoplastische Elastomer-Vulkanisate vorteilhafte Eigenschaften eines Thermoplast-Kunststoffes mit den vorteilhaften Eigenschaften eines Elastomer-Kunststoffs. Zudem lassen sich thermoplastische Elastomer-Vulkanisate vorteilhaft verarbeiten, insbesondere im Rahmen eines Extrusionsverfahrens, so dass eine ein thermoplastisches Elastomer-Vulkanisat umfassende Fluidleitung für Fahrzeuge vorteilhaft hergestellt werden kann.

Bei herkömmlichen aus TPE-V bestehenden Fluidleitungen kann unter Umständen der Nachteil auftreten, dass in der TPE-V-Fluidleitung vorhandene Bestandteile des Materials aus der Fluidleitung ausgewaschen und in dem Fluid angereichert werden. In herkömmlichen auf klassischer Schwefel-Vulkanisierung beruhenden Sperrschichten aus Schwefel-vernetztem thermoplastischen Elastomer-Vulkanisat werden neben Schwefel als Vernetzungsreagenz auch Katalysatoren, insbesondere Metall-Katalysatoren, zugegeben. Derartige Katalysatoren, insbesondere Metall-Katalysatoren, bzw. Schwefel kann unter Umständen durch das durch die Fluidleitung geleitete Fluid, insbesondere wässrige Flüssigkeit, aus der Schwefel-vernetzten TPE-V-Sperrschicht ausgewaschen werden und sich in der Fluid anreichern.

Da das Fluid einer Vielzahl von unterschiedlichen Fahrzeugbauteilen, z.B. einem Kühler eines Verbrennungsmotors eines Kraftfahrzeuges oder einer Batteriekühlvorrichtung einer elektrischen Fahrzeugbatterie eines Elektrofahrzeuges, zugeführt werden kann, ist es vorteilhaft eine hohe Reinheit des Fluids sicherzustellen und das Anreichern von in dem Kunststoff vorhandenen Compound-Bestandteilen in dem Fluid, insbesondere wässrige Flüssigkeit, zu verhindern, bzw. zumindest erheblich zu reduzieren.

Die Sperrschicht der Fluidleitung gemäß der vorliegenden Anmeldung umfasst kein klassisches Schwefel-vernetztes thermoplastisches Elastomer-Vulkanisat, sondern peroxidisch vernetztes thermoplastisches Elastomer-Vulkanisat.

Zur Herstellung von peroxidisch vernetztem TPE-V gemäß der vorliegenden Anmeldung wird kein Schwefel und werden auch keine entsprechenden Metall-Katalysatoren verwendet, sondern stattdessen während der Peroxid-Vulkanisierung insbesondere ein Peroxid-Derivat eingesetzt, welches eine wirksame chemische Vernetzung innerhalb einer ein peroxidisch vernetztes TPE-V umfassenden Sperrschicht sicherstellt.

Eine Peroxid-Vulkanisierung beruht insbesondere auf einem radikalischen Reaktionsmechanismus, welcher insbesondere durch Zugabe eines Co-Aktivators, insbesondere eines organischen Co-Aktivators, gestartet werden kann. Bei einer Peroxid-Vulkanisierung verwendetes Peroxid-Derivat, bzw. insbesondere verwendeter Co-Aktivator, werden während der Vulkanisierung wirksam in die Materialmatrix eingebunden und werden daher nicht oder nur in sehr geringem Umfang aus der Sperrschicht der Fluidleitung ausgewaschen.

Um eine wirksame Vulkanisierung sicherzustellen, wird der Thermoplast-Kunststoff, der Elastomer-Kunststoff, das Peroxid-Derivat und/oder der Co-Aktivator erwärmt, um einen vorteilhaften Energieeintrag während der Peroxid-Vulkanisierung sicherzustellen.

Da bei einer Peroxid-Vulkanisierung kein Schwefel und auch keine entsprechenden Metall-Katalysatoren verwendet werden, können derartige Bestandteile auch nicht aus einer ein peroxidisch vernetztes TPE-V umfassenden Sperrschicht ausgewaschen werden, so dass die Fluidleitung gemäß der vorliegenden Anmeldung besonders stabil gegenüber einer Auswaschung von Bestandteilen aus der Sperrschicht ist.

Darüber hinaus weist die ein peroxidisch vernetztes TPE-V umfassende Fluidleitung gemäß der vorliegenden Anmeldung eine ausreichende Temperatur- und Druckbeständigkeit, sowie eine ausreichende mechanische Beständigkeit auf.

In einer vorteilhaften Ausführungsform kann die ein peroxidisch vernetztes TPE-V umfassende Sperrschicht, Fluidtemperaturen zwischen -40 °C und 110 °C widerstehen.

In einer vorteilhaften Ausführungsform kann die ein peroxidisch vernetztes thermoplastisches Elastomer-Vulkanisat (TPE-V) umfassende Sperrschicht Außentemperaturen dauerhaft von bis zu 120°C, kurzzeitig sogar bis zu 150°C widerstehen.

Zudem weist die ein peroxidisch vernetztes TPE-V umfassende Fluidleitung gemäß der vorliegenden Anmeldung dynamisch verformbare Eigenschaften auf, so dass entsprechende Fluidleitungen in der beengten Bauraumsituation des Motoraums des Kraft-, bzw. Elektrofahrzeuges mit engen Biegeradien verlegt werden können.

Die Fluidleitung ist hierbei insbesondere als ein formstabiler Formschlauch ausgebildet, welcher insbesondere einen zweidimensional oder dreidimensional gekrümmten Verlauf aufweist, so dass ein wirksames Verlegen der Fluidleitung in einer beengten Bauraumsituation ermöglicht wird.

Die Fluidleitung ist ais eine mehrlagige Fluidleitung ausgebildet, welche neben der Sperrschicht noch zumindest eine weitere Schicht aufweist, welche radial außerhalb der Sperrschicht angeordnet ist.

In einer vorteilhaften Ausführungsform besteht die Sperrschicht der Fluidleitung vollständig aus peroxidisch vernetzten thermoplastischen Elastomer-Vulkanisat. Insbesondere besteht die Sperrschicht der Fluidleitung zu mehr als 90 Gew.-%, insbesondere zu mehr als 95 Gew.-%, insbesondere zu mehr als 99 Gew.-% aus peroxidisch vernetztem thermoplastischen Elastomer-Vulkanisat.

In einer vorteilhaften Ausführungsform beträgt bei einer mehrlagigen Fluidleitung die Dicke der Fluidleitung zwischen 1 mm und 4,5 mm, insbesondere zwischen 1,5 mm und 2 mm, wobei insbesondere die Dicke der Sperrschicht der mehrlagigen Fluidleitung zwischen 0,1 mm und 0,5 mm beträgt, insbesondere 0,2 mm.

In einer vorteilhaften Ausführungsform beträgt bei einer einlagigen Fluidleitung die Dicke der nur die Sperrschicht umfassenden Fluidleitung zwischen 1 mm und 4,5 mm, insbesondere zwischen 1,5 mm und 2 mm.

Die Fluidleitung weist eine weitere Leitungsschicht auf, welche radial außerhalb der Sperrschicht angeordnet ist, wobei die weitere Leitungsschicht ein thermoplastisches Elastomer-Vulkanisat (TPE-V) umfasst, insbesondere ein peroxidisch vernetztes thermoplastisches Elastomer-Vulkanisat (TPE-V) oder ein Schwefel-vernetztes thermoplastisches Elastomer-Vulkanisat (TPE-V) oder ein Harz-vernetztes thermoplastisches Elastomer-Vulkanisat (TPE-V) umfasst.

Dadurch wird beispielsweise der technische Vorteil erreicht, dass die radial außerhalb der Sperrschicht angeordnete weitere Leitungsschicht eine ausreichende Dicke der Fluidleitung sicherstellt und zudem die Sperrschicht vor Beschädigungen schützt. Insbesondere ist die weitere Leitungsschicht ebenso wie die Sperrschicht als ein peroxidisch vernetztes thermoplastisches Elastomer-Vulkanisat ausgebildet. Alternativ umfasst die weitere Leitungsschicht unterschiedlich zu der Sperrschicht, welche ein peroxidisch vernetztes thermoplastisches Elastomer-Vulkanisat umfasst, insbesondere ein Schwefel-vernetztes thermoplastisches Elastomer-Vulkanisat (TPE-V) oder ein Harz-vernetztes thermoplastisches Elastomer-Vulkanisat (TPE-V).

Da die weitere Leitungsschicht nicht in direktem Kontakt mit dem durch den Leitungsinnenraum der Fluidleitung geleiteten Fluid steht und somit die Gefahr von Auswaschungen aus der weiteren Leitungsschicht nicht gegeben ist, kann die weitere Leitungsschicht insbesondere ein Schwefel-vernetztes thermoplastisches Elastomer-Vulkanisat oder ein Harz-vernetztes thermoplastisches Elastomer-Vulkanisat (TPE-V) umfassen. Da die Herstellungskosten eines Schwefel-vernetzten, bzw. Harz-vernetzten thermoplastischen Elastomer-Vulkanisats üblicherweise günstiger als die Herstellungskosten eines peroxidisch vernetzten thermoplastischen Elastomer-Vulkanisats sind, können hierbei die Gesamtherstellungskosten der Fluidleitung reduziert werden.

In einer vorteilhaften Ausführungsform umfasst das peroxidisch vernetzte thermoplastische Elastomer-Vulkanisat (TPE-V) der Sperrschicht und/oder der weiteren Leitungsschicht eine Mischung aus Polyamid (PA) oder Polyolefin, insbesondere Polypropylen (PP) oder Polyethylen (PE), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Ethylen-Vinylacetat-Kautschuk (EVM).

In einer vorteilhaften Ausführungsform umfasst das Schwefel- oder Harz-vernetzte thermoplastische Elastomer-Vulkanisat (TPE-V) der weiteren Leitungsschicht eine Mischung aus Polyamid (PA) oder Polyolefin, insbesondere Polypropylen (PP) oder Polyethylen (PE), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Acrylat-Kautschuk (ACM).

Dadurch wird beispielsweise der technische Vorteil erreicht, dass durch die verwendeten Bestandteile eine chemisch und mechanisch stabile Fluidleitung bereitgestellt werden kann. Der Thermoplast-Kunststoff des peroxidisch vernetzten TPE-V umfasst Polyamid (PA) oder Polyolefin, insbesondere Polypropylen (PP) oder Polyethylen (PE). Die Elastomer-Komponente des peroxidisch vernetzten TPE-V umfasst Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), Ethylen-Vinylacetat-Kautschuk (EVM), und/oder Acrylat-Kautschuk (AVM), wobei insbesondere Ethylen-Vinylacetat-Kautschuk (EVM) nur in peroxidisch vernetztem TPE-V verwendet werden kann, und wobei insbesondere Acrylat-Kautschuk (AVM) nur in Schwefel- oder Harz-vernetztem TPE-V verwendet werden kann. Die entsprechenden Komponenten des peroxidisch vernetzten TPE-V können entweder Bestandteil der Sperrschicht oder der weiteren Leitungsschicht sein. Die entsprechenden Komponenten des peroxidisch vernetzten TPE-V können alternativ auch Bestandteil der Sperrschicht und der weiteren Leitungsschicht sein.

In einer vorteilhaften Ausführungsform umfasst das peroxidisch vernetzte thermoplastische Elastomer-Vulkanisat (TPE-V) der Sperrschicht und/oder der weiteren Leitungsschicht ein Peroxid-Derivat, und/oder einen Co-Aktivator, wobei das Peroxid-Derivat insbesondere ein Alkyl-Aralkyl-Peroxid-Derivat, ein Diaralkyl-Peroxid-Derivat, ein Peroxyketal-Derivat und/oder ein Peroxyester-Derivat umfasst, und/oder wobei der Co-Aktivator insbesondere Triallylcyanurat (TAC), Triallylisocyanurat (TAIC), Trimethylolpropan-trimethacrylat (TRIM), Dimethylacrylat, Trimethylacrylat, Triazin und/oder Bismaleinimid umfasst.

Dadurch wird beispielsweise der technische Vorteil erreicht, dass durch die Verwendung des Peroxid-Derivats, und/oder des Co-Aktivators während der Vulkanisationsreaktion ein vorteilhaftes peroxidisch vernetztes thermoplastisches Elastomer-Vulkanisat geformt werden kann. Bei einer Peroxid-Vernetzung läuft die Reaktion insbesondere über einen radikalischen Reaktionsmechanismus ab, bei dem eine direkte Vernetzung zwischen einem Thermoplastund einem Elastomer-Kunststoff des peroxidisch vernetzten thermoplastischen Elastomer-Vulkanisats erreicht wird.

Durch die Zugabe des Co-Aktivators kann ein vorteilhaftes peroxidisch vernetztes TPE-V erhalten werden.

In einer vorteilhaften Ausführungsform beträgt der Anteil des Peroxid-Derivats in der Sperrschicht und/oder der weiteren Leitungsschicht von 0,5 Gew.-% bis 6,0 Gew.-%, insbesondere von 0,8 Gew.-% bis 4,0 Gew.-%, insbesondere von 1,0 Gew.-% bis 2,0 Gew.%.

In einer vorteilhaften Ausführungsform beträgt der Anteil des Co-Aktivators in der Sperrschicht und/oder weiteren Leitungsschicht von 0,1 Gew.-% bis 10,0 Gew.-%, insbesondere von 0,5 Gew.-% bis 5,0 Gew.-%, insbesondere von 1,0 Gew.-% bis 2,0 Gew.%.

In einer vorteilhaften Ausführungsform umfasst das Schwefel-vernetzte thermoplastische Elastomer-Vulkanisat (TPE-V) der weiteren Leitungsschicht eine Schwefel-Verbindung, einen Katalysator und/oder einen Füllstoff, wobei die Schwefel-Verbindung insbesondere molekularen Schwefel und/oder Dischwefeldichlorid umfasst, wobei der Katalysator insbesondere 2-Mercaptobenzothiazol, Tetramethylthiuramdisulfid, N-Cyclohexyl-2-benzothiazolsulfenamid (CBS), N,N-Dicyclohexyl-2-benzothiazolsulfenamid (DCBS), Zinkdiethyldithiocarbamat (ZDEC), Zinkdibuthyldithiocarbamat (ZDBC), Tetramethylthioperoxydicarbondiamid (TMTD) und/oder Fettsäuren umfasst, und/oder wobei der Füllstoff Ruß, Metalloxid, insbesondere Magnesiumoxid und/oder Zinkoxid, Magnesiumcarbonat, Kieselsäure, Calciumsilikat, Aluminiumsilikat, Kreide, Kieselgur, Tonerde-Gel, Asphalt, Hartgummistaub, anorganische und organische Pigmente, Kautschukgel, *syn*-1,2-Polybutadien, *trans*-1,4-Polybutadien, PTFE, und/oder Polyethylen umfasst.

Dadurch wird beispielsweise der technische Vorteil erreicht, dass durch die Verwendung der Schwefel-Verbindung, des Katalysators und/oder des Füllstoffs während der Vulkanisationsreaktion ein vorteilhaftes Schwefel-vernetztes thermoplastisches Elastomer-Vulkanisat geformt werden kann.

In einer vorteilhaften Ausführungsform beträgt der Anteil der Schwefelverbindung in der weiteren Leitungsschicht von 0,5 Gew.-% bis 6,0 Gew.-%, insbesondere von 0,8 Gew.-% bis 4,0 Gew.-%, insbesondere von 1,0 Gew.-% bis 2,0 Gew.-%.

In einer vorteilhaften Ausführungsform beträgt der Anteil des Katalysators in der weiteren Leitungsschicht von 0,1 Gew.-% bis 10,0 Gew.-%, insbesondere von 0,5 Gew.-% bis 5,0 Gew.-%, insbesondere von 1,0 Gew.-% bis 2,0 Gew.-%.

In einer vorteilhaften Ausführungsform beträgt der Anteil des Füllstoffs in der weiteren Leitungsschicht von 0,1 Gew.-% bis 20,0 Gew.-%, insbesondere von 1,0 Gew.-% bis 15,0 Gew.-%, insbesondere von 5,0 Gew.-% bis 10,0 Gew.-%.

In einer vorteilhaften Ausführungsform umfasst das Harz-vernetzte thermoplastische Elastomer-Vulkanisat (TPE-V) der weiteren Leitungsschicht eine Harz-Verbindung, und einen weiteren Katalysator, wobei die Harz-Verbindung insbesondere ein Resolharz, insbesondere ein bromiertes oder chloriertes Resolharz umfasst, und/oder wobei der weitere Katalysator insbesondere Zinkoxid, Magnesiumoxid und/oder Zinnchlorid umfasst.

Dadurch wird beispielsweise der technische Vorteil erreicht, dass durch die Verwendung der Harz-Verbindung und/oder des weiteren Katalysators während der Vulkanisationsreaktion ein vorteilhaftes Harz-vernetztes thermoplastisches Elastomer-Vulkanisat geformt werden kann.

In einer vorteilhaften Ausführungsform beträgt der Anteil der Harzverbindung in der weiteren Leitungsschicht von 0,5 Gew.-% bis 6,0 Gew.-%, insbesondere von 0,8 Gew.-% bis 4,0 Gew.-%, insbesondere von 1,0 Gew.-% bis 2,0 Gew.-%.

In einer vorteilhaften Ausführungsform beträgt der Anteil des weiteren Katalysators in der weiteren Leitungsschicht von 0,1 Gew.-% bis 10,0 Gew.-%, insbesondere von 0,5 Gew.-% bis 5,0 Gew.-%, insbesondere von 1,0 Gew.-% bis 2,0 Gew.-%.

In einer vorteilhaften Ausführungsform sind die Sperrschicht und die weitere Leitungsschicht stoffschlüssig miteinander verbunden.

Dadurch wird beispielsweise der technische Vorteil erreicht, dass eine wirksame Verbindung zwischen Sperrschicht und weiterer Leitungsschicht bereitgestellt werden kann. Insbesondere kann die Fluidleitung umfassend die Sperrschicht und die weitere Leitungsschicht als ein Extrusionsteil, insbesondere Co-Extrusionsteil, geformt sein, welches insbesondere in einem gemeinsamen Extrusionsvorgangs, insbesondere Co-Extrusionsvorgang, extrudiert wird.

In einer vorteilhaften Ausführungsform umfasst die Fluidleitung zumindest einen Festigkeitsträger, welcher insbesondere in der Sperrschicht, oder zwischen der Sperrschicht und der weiteren Leitungsschicht, oder radial außerhalb der weiteren Leitungsschicht angeordnet ist.

Der Festigkeitsträger umfasst insbesondere Metallfasern, Glasfasern und/oder aromatische oder aliphatische Polyamid-Fasern, wobei die aromatischen oder aliphatischen Polyamid-Fasern Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon umfassen.

Insbesondere umfasst der Festigkeitsträger Glasfasern, para-Aramid-Fasern, Polyester-Fasern und/oder Polyvinylacetal-Fasern.

Dadurch wird beispielsweise der technische Vorteil erreicht, dass der zumindest eine Festigkeitsträger sicherstellt, dass auch wenn das Fluid mit einem hohen Druck durch die Fluidleitung geleitet wird, die strukturelle Integrität der Fluidleitung nicht beeinträchtigt wird. Dies wird dadurch gewährleistet, dass der Festigkeitsträger auf die Fluidleitung wirkende Druckkräfte wirksam aufnehmen kann. Die insbesondere verwendeten Fasern weisen eine hohe Temperatur- und Druckbeständigkeit auf und lassen sich vorteilhaft zu verformbaren Festigkeitsträgern verarbeiten. Aufgrund der vorteilhaften mechanischen und chemischen Eigenschaften können insbesondere meta-Aramid-Fasern und/oder Polyoxadiazol-Fasern in dem Festigkeitsträger verwendet werden. Insbesondere können die Fasern des Festigkeitsträgers zudem Resorcin-Formaldehyd-Latex umfassen.

In einer vorteilhaften Ausführungsform ist der Festigkeitsträger als ein einlagiger oder mehrlagiger Festigkeitsträger ausgebildet, und/oder umfasst der Festigkeitsträger insbesondere ein Gewebe, Gewirk, Geflecht, Gestrick und/oder einen spiralisierten Druckträger.

Dadurch wird beispielsweise der technische Vorteil erreicht, dass ein entsprechend ausgebildeter Festigkeitsträger besonders wirksam Druckbelastungen aufnehmen kann.

In einer vorteilhaften Ausführungsform weist die Fluidleitung eine Zwischenschicht auf, welche zwischen der Sperrschicht und der weiteren Leitungsschicht angeordnet ist, wobei der Festigkeitsträger insbesondere in der Zwischenschicht aufgenommen ist.

Insbesondere umfasst die Zwischenschicht ein thermoplastisches Elastomer-Vulkanisat (TPE-V), insbesondere ein peroxidisch vernetztes thermoplastisches Elastomer-Vulkanisat (TPE-V) oder ein Schwefel-vernetztes thermoplastisches Elastomer-Vulkanisat (TPE-V) oder ein Harz-vernetztes thermoplastisches Elastomer-Vulkanisat (TPE-V).

Dadurch wird beispielsweise der technische Vorteil erreicht, dass durch die Zwischenschicht die strukturelle Integrität der Fluidleitung während des Betriebs der Fluidleitung besonders vorteilhaft sichergestellt werden kann. Insbesondere stellt die Zwischenschicht einen wirksamen Einschluss des Festigkeitsträgers innerhalb der Fluidleitung sicher.

Insbesondere kann der Festigkeitsträger einen ersten Festigkeitsträger zwischen der Zwischenschicht und der weiteren Leitungsschicht und/oder einen zweiten Festigkeitsträger zwischen der Sperrschicht und der Zwischenschicht umfassen.

In einer vorteilhaften Ausführungsform weist die Fluidleitung eine Außenschicht auf, welche insbesondere radial außerhalb der Sperrschicht, radial außerhalb der weiteren Leitungsschicht, radial außerhalb der Zwischenschicht und/oder radial außerhalb des Festigkeitsträgers angeordnet ist.

Insbesondere können die Außenschicht und die weitere Leitungsschicht durch einen Haftvermittler miteinander verbunden sein, wobei der Haftvermittler insbesondere aus der Gruppe der modifizierten Polyolefine, insbesondere Chlor- oder Maleinsäureanhydridmodifizierten Polyolefine, aus der Gruppe der modifizierten Silane, insbesondere Alkoxyoder Chlor-modifizierte Silane, aus der Gruppe der Coagentien, insbesondere Trimethylpropantrimethacrylat (TRIM), Triallylisocyanurat (TAIC), Triallylcyanurat (TAC), und/oder Trimethallylisocyanurat (TMAIC), aus der Gruppe der modifizierten Polyamide, Polyester und/oder Carbonsäuren, als Phosphonium-Salz, als starke Base, wie z.B. Diaazabicycloundecen (DBU), Maleinsäureanhydride und/oder Bisphenole, gewählt ist.

Die Außenschicht umfasst insbesondere Epichlorhydrin-Kautschuk (ECO), chloriertes Polyethylen (CM), Chloropren-Kautschuk (CR), Acrylnitrilbutadien-Kautschuk (NBR), hydriertem Acrylnitrilbutadien-Kautschuk (HNBR), Ethylen-Propylen-Dien-Kautschuk (EPDM), Ethylen-Acrylat-Kautschuk (AEM), und/oder Acrylat-Kautschuk (ACM).

Dadurch wird beispielsweise der technische Vorteil erreicht, dass die Außenschicht einen wirksamen Schutz der Fluidleitung vor mechanischen Beschädigungen sicherstellt.

Insbesondere ist die Außenschicht als eine flammfeste Außenschicht ausgebildet, welche ein Flammschutzmittel aufweist, wobei das Flammschutzmittel insbesondere aus der Gruppe umfassend Blähgraphit, Borate, Phosphorverbindungen, Aluminiumhydroxide und/oder Antimontrioxid ausgewählt ist.

Insbesondere ist die Außenschicht als ein Hochtemperatur-Außenschicht ausgebildet, welche insbesondere Außentemperaturen von mehr als 150 °C, insbesondere von mehr als 175 °C, insbesondere von mehr als 185 °C widerstehen kann.

In einer vorteilhaften Ausführungsform ist die Fluidleitung als ein formstabiler Formschlauch ausgebildet, wobei der Formschlauch insbesondere einen zweidimensional oder dreidimensional gekrümmten Verlauf aufweist, oder ist die Fluidleitung als ein flexibel verformbarer Wellschlauch ausgebildet, oder weist die Fluidleitung zumindest einen als formstabilen Formschlauch ausgebildeten Abschnitt und zumindest einen als ein flexibel verformbarer Wellschlauch ausgebildeten Abschnitt auf.

Dadurch wird beispielsweise der technische Vorteil erreicht, dass der formstabile Formschlauch besonders vorteilhaft in einer beengten Bauraumsituation, z.B. in einem Motorraum eines Fahrzeuges, verlegt werden kann. Hierbei kann die zweidimensionale oder dreidimensionale Krümmung des Formschlauchs an die geometrischen Beschränkungen in dem Bauraum angepasst werden. Bei der Herstellung der als formstabiler Formschlauch ausgebildeten Fluidleitung wird ein Schlauchrohling in die gewünschte Form des Formschlauches gebogen. Anschließend wird der Schlauchrohling, z.B. durch Thermoformen, in der gewünschten Form fixiert, so dass der formstabile Formschlauch erhalten wird. Somit ist der formstabile Formschlauch nicht mehr frei plastisch verformbar.

Dennoch weist der formstabile Formschlauch eine gewisse Flexibilität auf, jedoch kehrt der Formschlauch bei einem Verbiegen oder Verdrehen des Formschlauchs erneut in die ursprüngliche Form zurück, so dass eine Formstabilität des formstabilen Formschlauchs sichergestellt wird.

Der Formschlauch kann zumindest abschnittsweise elastisch sein, wodurch der Formschlauch beim Einbau partiell aufgebogen werden kann, um einen wirksamen Einbau zu gewährleisten, wobei sich der Formschlauch nach dem Einbau jedoch aufgrund seiner elastischen Eigenschaften wieder in die ursprüngliche Form des Formschlauchs zurück verformt, so dass der Formschlauch eine wirksame Formstabilität aufweist. Insbesondere weist der zweidimensional oder dreidimensional gekrümmte formstabile Formschlauch zumindest eine Krümmung, insbesondere eine Mehrzahl von Krümmungen auf.

Insbesondere erstreckt sich ein zweidimensional gekrümmter formstabiler Formschlauch in einer einzigen Krümmungsebene. Bei einem zweidimensional gekrümmten formstabilen Formschlauch befinden sich somit alle Krümmungen in der einzigen Krümmungsebene.

Insbesondere erstreckt sich ein dreidimensional gekrümmter formstabiler Formschlauch in mehreren Krümmungsebenen, wobei sich die Krümmungsebenen schneiden. Bei einem dreidimensional gekrümmten formstabilen Formschlauch befinden sich somit die Krümmungen in unterschiedlichen Krümmungsebenen.

In einer vorteilhaften Ausführungsform ist der formstabile Formschlauch als ein thermogeformter formstabiler Formschlauch ausgebildet.

Dadurch wird beispielsweise der technische Vorteil erreicht, dass durch ein Thermoformen eine wirksame Ausbildung eines formstabilen Formschlauchs sichergestellt wird. Ein Thermoformen umfasst hierbei ein Verfahren zum Ausformen des formstabilen Formschlauchs unter Wärmeeinwirkung.

In einer vorteilhaften Ausführungsform ist die Fluidleitung als ein Extrusionsteil, insbesondere Co-Extrusionsteil, geformt.

Dadurch wird beispielsweise der technische Vorteil erreicht, dass ein Extrusionsformteil eine besonders vorteilhafte Fertigung der Fluidleitung sicherstellt und zudem eine wirksame Anordnung und stabile Verbindung der einzelnen Schichten innerhalb der Fluidleitung sichergestellt wird.

In einer vorteilhaften Ausführungsform ist die Fluidleitung als eine

Fahrzeugflüssigkeitsleitung geformt, welche ausgebildet ist Flüssigkeit, insbesondere Wasser, Kühlmittel und/oder Harnstoff-Lösung, in einem Fahrzeug zu leiten.

Dadurch wird beispielsweise der technische Vorteil erreicht, dass die Fahrzeugflüssigkeitsleitung das Leiten einer Vielzahl von unterschiedlichen Flüssigkeit in einem Fahrzeug ermöglicht.

In einer vorteilhaften Ausführungsform weist die Fluidleitung einen Innendurchmesser zwischen 5 mm und 30 mm, insbesondere zwischen 10 mm und 20 mm auf.

Dadurch wird beispielsweise der technische Vorteil erreicht, dass der Innendurchmesser der Fluidleitung ein ausreichend großes Volumen des Leitungsinnenraums bereitstellt, so dass eine ausreichende Menge an Fluid durch den Leitungsinnenraum der Fluidleitung geführt werden kann.

Gemäß einem zweiten Aspekt der Erfindung wird die Aufgabe durch ein Verfahren zum Herstellen einer Fluidleitung zum Leiten von Fluid gelöst, wobei das Verfahren die folgenden Schritte umfasst, Mischen eines Thermoplast-Kunststoffs, eines Elastomer-Kunststoffs und von Vulkanisationssubstanzen, wobei die Vulkanisationssubstanzen insbesondere ein Peroxid-Derivat und/oder einen Co-Aktivator umfassen, um eine vulkanisierbare Kunststoffmischung zu erhalten, Vulkanisieren der vulkanisierbaren Kunststoffmischung, um ein Vulkanisat, insbesondere Vulkanisat-Granulat zu erhalten, Ausbilden der Fluidleitung aus dem Vulkanisat, insbesondere Vulkanisat-Granulat, wobei die Fluidleitung eine Sperrschicht aus peroxidisch vernetztem thermoplastischen Elastomer-Vulkanisat (TPE-V) umfasst.

Dadurch wird beispielsweise der technische Vorteil erreicht, dass das Verfahren die vorteilhafte Herstellung einer Fluidleitung mit einer wirksamen chemischen und mechanischen Beständigkeit sicherstellt.

Insbesondere wird das Mischen des Thermoplast-Kunststoffs, des Elastomer-Kunststoffs und der Vulkanisationssubstanzen, um eine vulkanisierbare Kunststoffmischung zu erhalten, und das Vulkanisieren der vulkanisierbaren Kunststoffmischung gleichzeitig durchgeführt.

Insbesondere wird das Mischen des Thermoplast-Kunststoffs, des Elastomer-Kunststoffs und der Vulkanisationssubstanzen, um eine vulkanisierbare Kunststoffmischung zu erhalten, und/oder das Vulkanisieren der vulkanisierbaren Kunststoffmischung in einem Extruder, insbesondere Doppelschnecken-Extruder, durchgeführt.

Insbesondere wird während des Vulkanisierens die vulkanisierbare Kunststoffmischung, insbesondere der Thermoplast-Kunststoff, der Elastomer-Kunststoff, das Peroxid-Derivat und/oder der Co-Aktivator, erwärmt, um einen vorteilhaften Energieeintrag während der Vulkanisierung sicherzustellen. Insbesondere wird während des Vulkanisierens die vulkanisierbare Kunststoffmischung unter Friktion erwärmt.

Insbesondere wird das nach dem Vulkanisieren der vulkanisierbaren Kunststoffmischung, erhaltene Vulkanisat aus dem Extruder ausgetragen und anschließend granuliert werden, um ein Vulkanisat-Granulat zu erhalten.

Aus dem Vulkanisat-Granulat kann anschließend die Fluidleitung, insbesondere durch Thermoformen, ausgebildet werden, wobei die Fluidleitung eine Sperrschicht aus peroxidisch vernetztem thermoplastischen Elastomer-Vulkanisat (TPE-V) umfasst.

Insbesondere kann auf die Granulierung des Vulkanisats verzichtet werden, z.B. wenn eine einlagige Fluidleitung hergestellt wird, wobei in diesem Fall das nach dem Mischen und der Vulkanisation erhaltene Vulkanisat insbesondere direkt in die Fluidleitung ausgeformt, insbesondere extrudiert, wird.

In einer vorteilhaften Ausführungsform umfasst das Ausbilden der Fluidleitung aus dem Vulkanisat, insbesondere Vulkanisat-Granulat, das Extrudieren des Vulkanisats mit einem Extruder, wobei das Ausbilden der Fluidleitung und das Vulkanisieren der vulkanisierbaren Kunststoffmischung insbesondere gleichzeitig durchgeführt werden.

Dadurch wird beispielsweise der technische Vorteil erreicht, dass eine vorteilhafte Herstellung der Fluidleitung ermöglicht wird. Bei der gleichzeitigen Ausbildung der Fluidleitung und Vulkanisation der vulkanisierbaren Kunststoffmischung können der Thermoplast-Kunststoff, der Elastomer-Kunststoff und die Vulkanisationssubstanzen beispielweise in einem einzigen Verfahrensschritt vulkanisiert und extrudiert werden.

Insbesondere kann das Ausbilden der Fluidleitung aus dem Vulkanisat das Extrudieren des Vulkanisats und eines weiteren Vulkanisats im Rahmen eines Co-Extrusions-Verfahrens umfassen, wobei das weitere Vulkanisat durch das Mischen eines Thermoplast-Kunststoffs, eines Elastomer-Kunststoffs und von weiteren Vulkanisationssubstanzen erhalten wird. Auch hierbei kann das Ausbilden der Fluidleitung und das Vulkanisieren der weiteren vulkanisierbaren Kunststoffmischung insbesondere gleichzeitig durchgeführt werden.

Aus der vulkanisierbaren Kunststoffmischung wird die aus peroxidisch vernetztem thermoplastischen Elastomer-Vulkanisat (TPE-V) gebildete Sperrschicht der Fluidleitung erhalten. Insbesondere wird aus der weiteren vulkanisierbaren Kunststoffmischung eine weitere Leitungsschicht der Fluidleitung erhalten, welche radial außerhalb der Sperrschicht angeordnet ist. Insbesondere ist die weitere Leitungsschicht aus peroxidisch vernetztem thermoplastischen Elastomer-Vulkanisat (TPE-V) oder Schwefel- vernetztem thermoplastischen Elastomer-Vulkanisat (TPE-V) oder Harz-vernetztem thermoplastischen Elastomer-Vulkanisat (TPE-V) gebildet.

In einer vorteilhaften Ausführungsform schließt sich an das Ausbilden der Fluidleitung der weitere Verfahrensschritt, Formen eines formstabilen Formschlauchs aus der Fluidleitung, insbesondere durch Thermoformen der Fluidleitung, an.

Dadurch wird beispielsweise der technische Vorteil erreicht, dass durch das Formen des formstabilen Formschlauchs die zuvor plastisch verformbare Fluidleitung in eine für den Einbau in dem Fahrzeug benötigte, festgelegte Form überführt wird. Hierbei kann die Fluidleitung insbesondere durch Thermoformen in den formstabilen Formschlauch überführt werden.

Gemäß einem dritten Aspekt der Erfindung wird die Aufgabe durch eine Leitungsanordnung gelöst, mit einem Fahrzeugbauteil und mit einer Fluidleitung nach dem ersten Aspekt, wobei die Fluidleitung mit dem Fahrzeugbauteil fluidtechnisch verbunden ist, und wobei das Fahrzeugbauteil insbesondere eine elektrische Fahrzeugbatterie eines Elektrofahrzeuges, eine Motorkühlvorrichtung zum Kühlen eines Verbrennungsmotors eines Kraftfahrzeuges, eine Temperiervorrichtung zum Temperieren einer elektrischen Fahrzeugbatterie, einen Wärmetauscher zum Kühlen einer elektrischen Steuerung eines Fahrzeugs, und/oder einen Harnstofftank eines Fahrzeugs umfasst.

Dadurch wird beispielsweise der technische Vorteil erreicht, dass die Fluidleitung ein wirksames Leiten von Fluid, insbesondere wässriger Flüssigkeit, zu einer Vielzahl von Fahrzeugbauteilen eines Fahrzeugs ermöglicht. Insbesondere umfasst die Leitungsanordnung eine Mehrzahl von Fahrzeugbauteilen, welche mit der Fluidleitung fluidtechnisch verbunden sind. Insbesondere umfasst die Leitungsanordnung eine Mehrzahl von Fluidleitungen nach dem ersten Aspekt, welche mit dem Fahrzeugbauteil, insbesondere mit der Mehrzahl von Fahrzeugbauteilen, fluidtechnisch verbunden sind.

Ausführungsbeispiele der Erfindung sind in den Zeichnungen dargestellt und werden im Folgenden näher beschrieben.

### Es zeigen:

- Fig. 1: eine perspektivische Ansicht einer Fluidleitung gemäß einer ersten Ausführungsform;
- Fig. 2: eine perspektivische Ansicht einer Fluidleitung gemäß einer zweiten Ausführungsform;
- Fig. 3: eine perspektivische Ansicht einer Fluidleitung gemäß einer dritten Ausführungsform;
- Figs. 4A, 4B, 4C: perspektivische Ansichten von als formstabile Formschläuche ausgebildeten Fluidleitungen gemäß verschiedener Ausführungsformen;
- Figs. 5A, 5B: perspektivische Ansichten von als formstabile Formschläuche ausgebildeten Fluidleitungen gemäß verschiedener Ausführungsformen;
- Fig. 6: eine perspektivische Darstellung einer Leitungsanordnung gemäß einer Ausführungsform; und
- Fig. 7: eine schematische Darstellung eines Verfahrens zum Herstellen einer Fluidleitung.

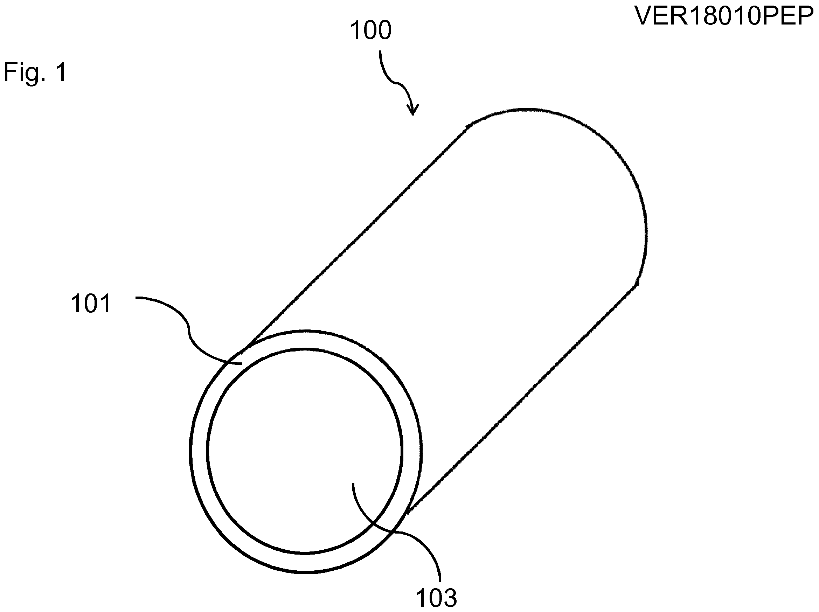

Fig. 1 zeigt eine perspektivische Ansicht einer Fluidleitung 100 gemäß einer ersten Ausführungsform. Der Fluidleitung 100 umfasst insbesondere eine Fluidleitung 100 für Fahrzeuge, insbesondere für Kraftfahrzeuge mit einem Verbrennungsmotor oder für Elektrofahrzeuge mit einem Elektromotor.

Um ausreichend elektrische Energie zum Betrieb des Elektromotors zu speichern, weisen Elektrofahrzeuge eine elektrische Fahrzeugbatterie auf. Um einen optimalen Betrieb der elektrischen Fahrzeugbatterie während der Lebensdauer des Elektrofahrzeuges zu gewährleisten, ist es vorteilhaft die elektrische Fahrzeugbatterie mit einer konstanten Temperatur zu betrieben, da bei starken Temperaturschwankungen die Batterieleistung und die Lebensdauer der elektrischen Fahrzeugbatterie beeinträchtigt werden können.

Hierzu kann insbesondere eine Temperiervorrichtung zum Temperieren einer elektrischen Fahrzeugbatterie, verwendet werden, welche von einem Fluid, insbesondere wässriger Flüssigkeit, durchströmt wird, wobei das Fluid je nach Betriebssituation entweder Wärme von der elektrischen Fahrzeugbatterie abführen kann, um die elektrische Fahrzeugbatterien zu kühlen, oder Wärme der elektrischen Fahrzeugbatterie zuführen kann, um die elektrische Fahrzeugbatterie zu wärmen. Somit kann durch die Temperiervorrichtung eine vorteilhaft konstante Temperatur der elektrischen Fahrzeugbatterie sichergestellt werden.

Doch auch eine elektrische Steuerung zum Steuern des Elektromotors und/oder zum Steuern der elektrischen Fahrzeugbatterie kann Wärme freisetzen, welche mit einem Wärmetauscher abgeführt werden kann, um die elektrische Steuerung zu kühlen.

Um das Fluid wirksam der Temperiervorrichtung, bzw. dem Wärmetauscher zuzuführen und/oder um das Fluid wirksam von der Temperiervorrichtung, bzw. dem Wärmetauscher abzuführen, ist der Wärmetauscher insbesondere mit einer Fluidleitung 100 gemäß der vorliegenden Offenbarung verbunden.

Doch auch in Kraftfahrzeugen mit Verbrennungsmotoren ist der Verbrennungsmotor mit einer Motorkühlvorrichtung verbunden, welche von einem Fluid, insbesondere wässriger Flüssigkeit, durchströmt wird, um während des Verbrennungsvorgangs freigesetzte Wärme wirksam abzuführen und den Verbrennungsmotor zu kühlen.

Um das Fluid wirksam der Motorkühlvorrichtung zuzuführen und/oder um das Fluid wirksam von der Motorkühlvorrichtung abzuführen, ist die Motorkühlvorrichtung insbesondere mit einer Fluidleitung 100 gemäß der vorliegenden Offenbarung verbunden.

Das durch die Fluidleitung 100 der Temperiervorrichtung, bzw. dem Wärmetauscher, bzw. der Motorkühlvorrichtung, zugeführte, bzw. abgeführte Fluid kann eine wässrige Flüssigkeit, insbesondere Wasser oder ein Wasser-Glykol-Gemisch, umfassen.

Zur Leistungssteigerung und/oder zum Senken des Kraftstoffverbrauchs und von Emissionen kann in Kraftfahrzeugen mit Verbrennungsmotoren eine Fluideinspritzvorrichtung verwendet werden, welche ausgebildet ist Fluid, insbesondere eine wässrige Flüssigkeit, insbesondere Wasser oder ein Wasser-Alkohol Gemisch, in den Verbrennungsmotor einzuspritzen, um eine Abkühlung bei der Kraftstoffverbrennung zu bewirken. Um das Fluid wirksam der Fluideinspritzvorrichtung zuzuführen, ist die Fluideinspritzvorrichtung insbesondere mit einer Fluidleitung 100 gemäß der vorliegenden Offenbarung verbunden.

Um Emissionen zu senken, werden in Fahrzeugen mit Verbrennungsmotoren, insbesondere Dieselfahrzeugen, zudem Abgasreinigungsvorrichtungen, insbesondere SCR-Abgasreinigungssysteme verwendet, bei denen Harnstoff-Lösung dem Abgasstrang des Fahrzeugs zugeführt wird. Um die in einem Harnstoff-Behälter gelagerte Harnstoff-Lösung einem SCR-Abgasreinigungssystem zuzuführen, bzw. von diesem abzuführen, wird die Harnstoff-Lösung insbesondere durch eine mit dem Harnstoff-Behälter verbundene Fluidleitung 100 gemäß der vorliegenden Offenbarung geleitet.

Herkömmliche, im Stand der Technik offenbarte, aus Kunststoff bestehende Fluidleitungen, welche in Fahrzeugen verwendet werden, weisen oftmals den Nachteil auf, dass in dem Kunststoff vorhandene Compound-Bestandteile, z.B. metallische Rückstände, während des Betriebs der Fluidleitung aus dem Kunststoff ausgewaschen und durch das Fluid mitgeführt werden können. Da das Fluid einer Vielzahl von unterschiedlichen Fahrzeugbauteilen, z.B. einem Verbrennungsmotor zugeführt werden kann, ist es vorteilhaft eine hohe Reinheit des Fluids sicherzustellen und das Anreichern von in dem Kunststoff vorhandenen Compound-Bestandteilen in dem Fluid zu verhindern, bzw. zumindest erheblich zu reduzieren.

Zudem müssen in Fahrzeugen, insbesondere in Elektrofahrzeugen und/oder Kraftfahrzeugen, verwendete Fluidleitungen 100 eine ausreichende chemische Beständigkeit gegenüber dem geleiteten Fluid aufweisen, eine ausreichende Temperatur- und Druckbeständigkeit, sowie eine ausreichende mechanische Beständigkeit aufweisen. Zudem müssen die entsprechenden Fluidleitungen 100 in der beengten Bauraumsituation des Motoraums des Kraft-, bzw. Elektrofahrzeuges mit engen Biegeradien verlegt werden können, und aus diesem Grund dynamisch verformbare Eigenschaften aufweisen.

Die Fluidleitung 100 gemäß der vorliegenden ersten Ausführungsform weist eine Sperrschicht 101 auf, welche einen Leitungsinnenraum 103 der Fluidleitung 100 zum Leiten des Fluids begrenzt. Die Sperrschicht 101 ist hierbei ausgebildet eine Diffusion des Fluids durch die Sperrschicht 101 zu reduzieren und das Auswaschen von in dem Kunststoff vorhandenen Compound-Bestandteilen zu verhindern, bzw. zu reduzieren.

Die in Fig. 1 dargestellte Fluidleitung 100 ist insbesondere als eine einlagige Fluidleitung 100 ausgebildet. Gemäß einer weiteren Ausführungsform kann die Fluidleitung 100 als eine mehrlagige Fluidleitung 100 ausgebildet sein, welche neben der Sperrschicht 101 noch zumindest eine weitere Schicht aufweist, welche radial außerhalb der Sperrschicht 101 angeordnet ist.

Um die vorteilhaften Eigenschaften der Fluidleitung 100 sicherzustellen, umfasst die Sperrschicht 101 der Fluidleitung 100 ein peroxidisch vernetztes thermoplastisches Elastomer-Vulkanisat (TPE-V).

Thermoplastische Elastomer-Vulkanisate (TPE-V) sind Kunststoffe, bei denen Elastomere, z.B. Ethylen-Propylen-Dien-Kautschuk (EPDM), in eine Thermoplast-Matrix, z.B. Polypropylen (PP), eingebunden sind, und durch einen Vulkanisierungsvorgang miteinander chemisch vernetzt werden.

Die Thermoplast-Matrix des thermoplastischen Elastomer-Vulkanisats (TPE-V) stellt hierbei eine vorteilhafte Härte und Widerstandsfähigkeit bei erhöhten Temperaturen sicher, wohingegen das Elastomer eine Elastizität des thermoplastischen Elastomer-Vulkanisats (TPE-V) sicherstellt.

Somit vereinigen thermoplastische Elastomer-Vulkanisate (TPE-V) vorteilhafte Eigenschaften eines Thermoplast-Kunststoffes mit den vorteilhaften Eigenschaften eines Elastomer-Kunststoffs. Zudem lassen sich thermoplastische Elastomer-Vulkanisate (TPE-V) vorteilhaft verarbeiten, insbesondere im Rahmen eines Extrusionsverfahrens, so dass eine ein thermoplastisches Elastomer-Vulkanisat (TPE-V) umfassende Fluidleitung 100 für Fahrzeuge gemäß der vorliegenden Offenbarung vorteilhaft hergestellt werden kann.

Herkömmliche aus thermoplastischem Elastomer-Vulkanisat (TPE-V) bestehende Fluidleitungen werden üblicherweise im Rahmen eines klassischen, auf einer Schwefel-Vernetzung basierenden, Vulkanisierungsverfahrens hergestellt, bei dem während der Vulkanisation der Thermoplast und das Elastomer üblicherweise mit einer SchwefelVerbindung und Katalysatoren, insbesondere Metall-Verbindungen, versetzt werden, um ein Schwefel-vernetztes thermoplastisches Elastomer-Vulkanisat (TPE-V) zu erhalten, wobei die Vernetzung über Schwefelbrücken erreicht wird.

Bei derartigen herkömmlichen Schwefel-vernetzten thermoplastischen Elastomer-Vulkanisaten (TPE-V) besteht jedoch oftmals der Nachteil, dass nach dem Vulkanisationsvorgang nicht verbrauchte Bestandteile des Schwefels und/oder des Katalysators, insbesondere Metall-Verbindungen, nicht wirksam in die Matrix des Schwefel-vernetzten thermoplastischen Elastomer-Vulkanisats (TPE-V) eingebunden sind, und durch das Fluid aus der Matrix ausgewaschen und somit in dem Fluid angereichert werden können, wodurch die mit dem Fluid versorgten Fahrzeugbauteile unter Umständen beeinträchtigt werden können.

Um diesem Nachteil vorzubeugen, besteht die Sperrschicht 101 der Fluidleitung 100 gemäß der vorliegenden Anmeldung nicht aus einem herkömmlichen Schwefel-vernetzten thermoplastischen Elastomer-Vulkanisat (TPE-V), sondern aus einem peroxidisch vernetzten thermoplastischen Elastomer-Vulkanisat (TPE-V).

Zur Herstellung des peroxidisch vernetzten thermoplastischen Elastomer-Vulkanisats (TPE-V) wird der Thermoplast und das Elastomer mit einem Peroxid-Derivat und gegebenenfalls optional einem Co-Aktivator versetzt und vulkanisiert. Bei einer Peroxid-Vernetzung läuft die Reaktion über einen radikalischen Reaktionsmechanismus ab, bei dem eine direkte Vernetzung zwischen dem Thermoplast und dem Elastomer erreicht wird, ohne dass eine Vernetzung über Schwefelbrücken auftritt.

Da bei einer Peroxid-Vernetzung kein Schwefel und kein Schwefel-Katalysator, insbesondere kein Metall-Katalysator, verwendet werden, kann somit bei einer Sperrschicht 101 aus einem peroxidisch vernetzten thermoplastischen Elastomer-Vulkanisats (TPE-V) auch kein Schwefel und/oder Schwefel-Katalysator, insbesondere Metall-Katalysator, aus der Matrix der Sperrschicht 101 ausgewaschen werden, so dass die Reinheit des durch die Fluidleitung 100 gemäß der vorliegenden Offenbarung geleiteten Fluids sichergestellt wird, und die mit dem Fluid versorgten Fahrzeugbauteile nicht beeinträchtigt werden.

Hierbei wird insbesondere betont, dass nach dem Vulkanisationsvorgang das Peroxid-Derivat, bzw. der optional zugegebene Co-Aktivator, vorteilhaft in der Matrix des peroxidisch vernetzten thermoplastischen Elastomer-Vulkanisats (TPE-V) eingebunden sind, so dass eine Auswaschung des Peroxid-Derivats, bzw. des optional zugegebenen Co-Aktivators, während des Betriebs der Fluidleitung 100 nicht auftritt, bzw. stark reduziert ist.

Somit stellt die ein peroxidisch vernetztes thermoplastisches Elastomer-Vulkanisat (TPE-V) umfassende Sperrschicht 101 der Fluidleitung 100 gemäß der vorliegenden Anmeldung eine besonders hohe Widerstandsfähigkeit gegenüber dem durch die Fluidleitung 100 geleiteten Fluid sicher und verhindert, bzw. reduziert Auswaschungen aus der Sperrschicht 101.

Insbesondere umfasst das peroxidisch vernetzte thermoplastische Elastomer-Vulkanisat (TPE-V) eine Mischung aus Polyamid (PA) oder Polyolefin, insbesondere Polypropylen (PP) oder Polyethylen (PE), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Ethylen-Vinylacetat-Kautschuk (EVM).

Das Polyamid (PA) oder Polyolefin, insbesondere Polypropylen (PP) oder Polyethylen (PE), stellt hierbei den Thermoplast-Kunststoff des thermoplastischen Elastomer-Vulkanisats (TPE-V) bereit.

Das Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), Ethylen-Vinylacetat-Kautschuk (EVM), und/oder Acrylat-Kautschuk (AVM) stellt hierbei die Elastomer-Komponente des thermoplastischen Elastomer-Vulkanisats (TPE-V) bereit.

Insbesondere umfasst das peroxidisch vernetzte thermoplastische Elastomer-Vulkanisat (TPE-V) eine Mischung aus Polypropylen (PP) mit Ethylen-Propylen-Dien-Kautschuk (EPDM).

Insbesondere umfasst das peroxidisch vernetzte thermoplastische Elastomer-Vulkanisat (TPE-V) ein Peroxid-Derivat, und/oder einen Co-Aktivator. Das peroxidisch vernetzte thermoplastische Elastomer-Vulkanisat kann ein Peroxid-Derivat und einen Co-Aktivator umfassen.

Insbesondere umfasst das Peroxid-Derivat ein Alkyl-Aralkyl-Peroxid-Derivat, ein Diaralkyl-Peroxid-Derivat, ein Peroxyketal-Derivat und/oder ein Peroxyester-Derivat.

Insbesondere umfasst der Co-Aktivator Triallylcyanurat (TAC), Triallylisocyanurat (TAIC), Trimethylolpropan-trimethacrylat (TRIM), Dimethylacrylat, Trimethylacrylat, Triazin und/oder Bismaleinimid.

Insbesondere beträgt der Anteil des Peroxid-Derivats in der Sperrschicht 101 von 0,5 Gew.% bis 6,0 Gew.-%, insbesondere von 0,8 Gew.-% bis 4,0 Gew.-%, insbesondere von 1,0 Gew.-% bis 2,0 Gew.-%.

Insbesondere beträgt der Anteil des Co-Aktivators in der Sperrschicht 101 von 0,1 Gew.-% bis 10,0 Gew.-%, insbesondere von 0,5 Gew.-% bis 5,0 Gew.-%, insbesondere von 1,0 Gew.-% bis 2,0 Gew.-%.

Die Fluidleitung 100 zum Leiten von Fluid gemäß der vorliegenden Anmeldung umfasst eine Sperrschicht 101 aus peroxidisch vernetztem thermoplastischen Elastomer-Vulkanisat (TPE-V), wodurch Auswaschungen aus der Sperrschicht 101 in das Fluid verhindert, bzw. reduziert werden können. Zudem weist die ein peroxidisch vernetztes thermoplastisches Elastomer-Vulkanisat (TPE-V) umfassende Sperrschicht 101 eine chemische Beständigkeit auf, kann erhöhten Temperatur- und Druckbedingungen wirksam widerstehen und ist mechanisch stabil.

Insbesondere kann die ein peroxidisch vernetztes thermoplastisches Elastomer-Vulkanisat (TPE-V) umfassende Sperrschicht 101 Fluidtemperaturen zwischen -40 °C und 110 °C widerstehen. Insbesondere kann die ein peroxidisch vernetztes thermoplastisches Elastomer-Vulkanisat (TPE-V) umfassende Sperrschicht 101 dauerhaft Außentemperaturen von bis zu 120°C, kurzzeitig sogar bis 150°C widerstehen.

Zudem kann die Fluidleitung 100 mit der ein peroxidisch vernetztes thermoplastisches Elastomer-Vulkanisat (TPE-V) umfassenden Sperrschicht 101 mit engen Biegeradien verlegt werden, so dass die Fluidleitung 100 in einer beengten Bauraumsituation in einem Fahrzeug verbaut werden kann.

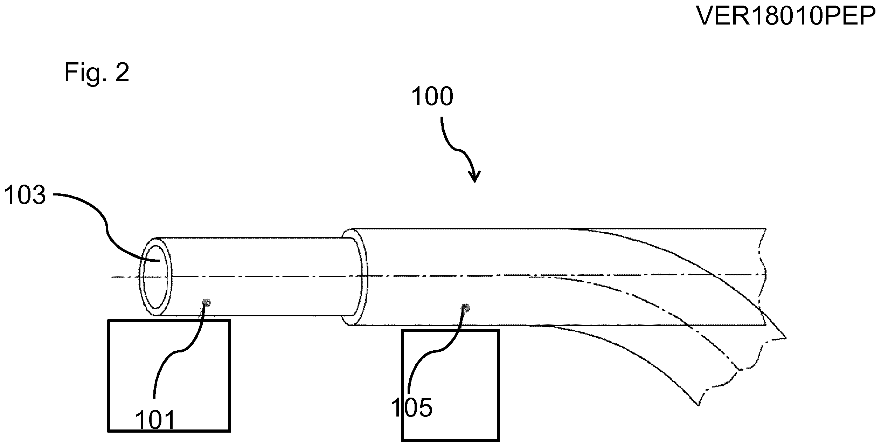

Fig. 2 zeigt eine perspektivische Ansicht einer Fluidleitung 100 gemäß einer zweiten Ausführungsform.

Die Fluidleitung 100 weist eine Sperrschicht 101 aus peroxidisch vernetztem thermoplastischen Elastomer-Vulkanisat (TPE-V) auf und weist eine weitere Leitungsschicht 105 auf, welche radial außerhalb der Sperrschicht 101 angeordnet ist.

Hinsichtlich der Verwendung der Fluidleitung 100 und der Ausbildung der ein peroxidisch vernetztes thermoplastisches Elastomer-Vulkanisat (TPE-V) umfassenden Sperrschicht 101 wird auf die Ausführungen in Bezug auf die in Fig. 1 gezeigten Fluidleitung 100 gemäß der ersten Ausführungsform verwiesen.

Die weitere Leitungsschicht 105 der in Fig. 2 gezeigten Fluidleitung 100 gemäß der zweiten Ausführungsform umfasst ein thermoplastisches Elastomer-Vulkanisat (TPE-V), insbesondere ein peroxidisch vernetztes thermoplastisches Elastomer-Vulkanisat (TPE-V) oder ein Schwefel-vernetztes thermoplastisches Elastomer-Vulkanisat (TPE-V) oder ein Harz-vernetztes thermoplastisches Elastomer-Vulkanisat (TPE-V).

Hinsichtlich der Herstellung und der Bestandteile einer ein peroxidisch vernetztes thermoplastisches Elastomer-Vulkanisat (TPE-V) umfassenden weiteren Leitungsschicht 105 wird hierzu auf die Ausführungen in Bezug auf die ein peroxidisch vernetztes thermoplastisches Elastomer-Vulkanisat (TPE-V) umfassenden Sperrschicht 101 gemäß der in Fig. 1 dargestellten ersten Ausführungsform verwiesen.

Insbesondere umfasst das Schwefel- oder Harz-vernetzte thermoplastische Elastomer-Vulkanisat (TPE-V) der weiteren Leitungsschicht 105 eine Mischung aus Polyamid (PA) oder Polyolefin, insbesondere Polypropylen (PP) oder Polyethylen (PE), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Acrylat-Kautschuk (ACM).

Da die weitere Leitungsschicht 105 der in Fig. 2 dargestellten Fluidleitung 100 gemäß der zweiten Ausführungsform radial außerhalb der Sperrschicht 101 angeordnet ist, steht die weitere Leitungsschicht 105 nicht in direktem Kontakt mit dem durch den Leitungsinnenraum 103 geführten Fluid, so dass sich in Bezug auf die weitere Leitungsschicht 105 das Problem der Auswaschungen von Schichtbestanteilen durch das Fluid nicht relevant ist.

Somit kann die weitere Leitungsschicht 105 im Gegensatz zu der Sperrschicht 101 ein klassisches Schwefel-vernetztes thermoplastisches Elastomer-Vulkanisat (TPE-V), oder ein Harz-vernetztes thermoplastisches Elastomer-Vulkanisat (TPE-V) umfassen, welche üblicherweise in der Herstellung günstiger sind.

Wie bereits im Detail in Bezug auf die Fig. 1 ausgeführt ist, wird bei einem auf einer Schwefel-Vernetzung basierenden Vulkanisierungsverfahrens während der Vulkanisation der Thermoplast und das Elastomer üblicherweise mit einer Schwefel-Verbindung und Katalysatoren, insbesondere Metall-Verbindungen, versetzt, um ein Schwefel-vernetztes thermoplastischem Elastomer-Vulkanisat (TPE-V) zu erhalten, beim dem die Vernetzung über Schwefelbrücken erreicht wird.

Insbesondere umfasst das Schwefel-vernetzte thermoplastische Elastomer-Vulkanisat (TPE-V) eine Schwefel-Verbindung, einen Katalysator und/oder einen Füllstoff.

Insbesondere umfasst die Schwefel-Verbindung molekularen Schwefel und/oder Dischwefeldichlorid.

Insbesondere umfasst der Katalysator 2-Mercaptobenzothiazol, Tetramethylthiuramdisulfid, N-Cyclohexyl-2-benzothiazolsulfenamid (CBS), N,N-Dicyclohexyl-2-benzothiazolsulfenamid (DCBS), Zinkdiethyldithiocarbamat (ZDEC), Zinkdibuthyldithiocarbamat (ZDBC), Tetramethylthioperoxydicarbondiamid (TMTD) und/oder Fettsäuren.

Insbesondere umfasst der Füllstoff Ruß, Metalloxid, insbesondere Magnesiumoxid und/oder Zinkoxid, Magnesiumcarbonat, Kieselsäure, Calciumsilikat, Aluminiumsilikat, Kreide, Kieselgur, Tonerde-Gel, Asphalt, Hartgummistaub, anorganische und organische Pigmente, Kautschukgel, *syn*-1,2-Polybutadien, *trans*-1,4-Polybutadien, PTFE, und/oder Polyethylen.

Insbesondere beträgt der Anteil der Schwefelverbindung in der weiteren Leitungsschicht 105 von 0,5 Gew.-% bis 6,0 Gew.-%, insbesondere von 0,8 Gew.-% bis 4,0 Gew.-%, insbesondere von 1,0 Gew.-% bis 2,0 Gew.-%.

Insbesondere beträgt der Anteil des Katalysators in der weiteren Leitungsschicht 105 von 0,1 Gew.-% bis 10,0 Gew.-%, insbesondere von 0,5 Gew.-% bis 5,0 Gew.-%, insbesondere von 1,0 Gew.-% bis 2,0 Gew.-%.

Insbesondere beträgt der Anteil des Füllstoffs in der weiteren Leitungsschicht 105 von 0,1 Gew.-% bis 20,0 Gew.-%, insbesondere von 1,0 Gew.-% bis 15,0 Gew.-%, insbesondere von 5,0 Gew.-% bis 10,0 Gew.-%.

Statt eines Schwefel-vernetzten thermoplastischen Elastomer-Vulkanisats (TPE-V) kann die weitere Leitungsschicht 105 auch ein Harz-vernetztes thermoplastisches Elastomer-Vulkanisat (TPE-V) umfassen.

Insbesondere umfasst das Harz-vernetzte thermoplastische Elastomer-Vulkanisat (TPE-V) der weiteren Leitungsschicht 105 eine Harz-Verbindung, und einen weiteren Katalysator, wobei die Harz-Verbindung insbesondere ein Resolharz, insbesondere ein bromiertes oder chloriertes Resolharz umfasst, und/oder wobei der weitere Katalysator insbesondere Zinkoxid, Magnesiumoxid und/oder Zinnchlorid umfasst.

Insbesondere beträgt der Anteil der Harzverbindung in der weiteren Leitungsschicht 105 von 0,5 Gew.-% bis 6,0 Gew.-%, insbesondere von 0,8 Gew.-% bis 4,0 Gew.-%, insbesondere von 1,0 Gew.-% bis 2,0 Gew.-%.

Insbesondere beträgt der Anteil des weiteren Katalysators in der weiteren Leitungsschicht 105 von 0,1 Gew.-% bis 10,0 Gew.-%, insbesondere von 0,5 Gew.-% bis 5,0 Gew.-%, insbesondere von 1,0 Gew.-% bis 2,0 Gew.-%.

Da der Herstellungsaufwand und die Herstellungskosten eines Schwefel-vernetzten oder Harz-vernetzen thermoplastischen Elastomer-Vulkanisats (TPE-V) gegenüber einem Peroxid-vernetzten thermoplastischen Elastomer-Vulkanisat (TPE-V) geringer sind, können dadurch die Herstellungskosten der in Fig. 2 dargestellte Fluidleitung 100 gemäß der zweiten Ausführungsform gesenkt werden, da die Dicke der ein peroxidisch vernetztes thermoplastisches Elastomer-Vulkanisat (TPE-V) umfassenden Sperrschicht 101 verringert werden kann.

Die Fluidleitung 100 gemäß der in Fig. 2 dargestellten zweiten Ausführungsform kann insbesondere als eine Co-extrudierte Fluidleitung 100 geformt sein, bei der die Sperrschicht 101 und die weitere Leitungsschicht 105 stoffschlüssig miteinander verbunden sind.

Um die mechanische Stabilität der Fluidleitung 100 zu erhöhen, kann die Fluidleitung 100 insbesondere einen in Fig. 2 nicht dargestellten Festigkeitsträger 109 umfassen, welcher innerhalb der Sperrschicht 101, innerhalb der weiteren Leitungsschicht 105 oder zwischen der Sperrschicht 101 und der weiteren Leitungsschicht 105 angeordnet ist.

Der Festigkeitsträger 109 umfasst insbesondere Metallfasern, Glasfasern und/oder aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, oder Mischungen davon.

Insbesondere umfasst der Festigkeitsträger Glasfasern, para-Aramid-Fasern, Polyester-Fasern und/oder Polyvinylacetal-Fasern. Der Festigkeitsträger 109 ist insbesondere als einlagiger oder mehrlagiger Festigkeitsträger 109 ausgebildet, und der Festigkeitsträger 109 umfasst insbesondere ein Gewebe, Gewirk, Geflecht, Gestrick und/oder einen spiralisierten Druckträger.

Die Fluidleitung 100 kann insbesondere eine in Fig. 2 nicht dargestellte Zwischenschicht 107 aufweisen, welche zwischen der Sperrschicht 101 und der weiteren Leitungsschicht 105 angeordnet ist, wobei der Festigkeitsträger 109 insbesondere in der Zwischenschicht 107 aufgenommen ist. Die Zwischenschicht 107 ist ausgebildet, einen wirksamen Verbund zwischen der Sperrschicht 101 und der weiteren Leitungsschicht 105 bereitzustellen.

Insbesondere umfasst die Zwischenschicht 107 ein thermoplastisches Elastomer-Vulkanisat (TPE-V), insbesondere ein peroxidisch vernetztes thermoplastisches Elastomer-Vulkanisat (TPE-V) oder ein Schwefel-vernetztes thermoplastisches Elastomer-Vulkanisat (TPE-V) oder ein Harz-vernetztes thermoplastisches Elastomer-Vulkanisat (TPE-V).

Die Fluidleitung 100 kann insbesondere eine in Fig. 2 nicht dargestellte Außenschicht umfassen, welche radial außerhalb der weiteren Leitungsschicht 105 angeordnet ist. Die Außenschicht ist ausgebildet, die Fluidleitung 100 vor äußeren mechanischen und chemischen Einflüssen wirksam zu schützen.

Insbesondere können die Außenschicht und die weitere Leitungsschicht 105 durch einen Haftvermittler miteinander verbunden sein, wobei der Haftvermittler insbesondere aus der Gruppe der modifizierten Polyolefine, insbesondere Chlor- oder Maleinsäureanhydridmodifizierten Polyolefine, aus der Gruppe der modifizierten Silane, insbesondere Alkoxyoder Chlor-modifizierte Silane, aus der Gruppe der Coagentien, insbesondere Trimethylpropantrimethacrylat (TRIM), Triallylisocyanurat (TAIC), Triallylcyanurat (TAC), und/oder Trimethallylisocyanurat (TMAIC), aus der Gruppe der modifizierten Polyamide, Polyester und/oder Carbonsäuren, als Phosphonium-Salz, als starke Base, wie z.B. Diaazabicycloundecen (DBU), Maleinsäureanhydride und/oder Bisphenole, gewählt ist.

Insbesondere umfasst die Außenschicht Epichlorhydrin-Kautschuk (ECO), chloriertes Polyethylen (CM), Chloropren-Kautschuk (CR), Acrylnitrilbutadien-Kautschuk (NBR), hydriertem Acrylnitrilbutadien-Kautschuk (HNBR), Ethylen-Propylen-Dien-Kautschuk (EPDM), Ethylen-Acrylat-Kautschuk (AEM), und/oder Acrylat-Kautschuk (ACM).

Insbesondere ist die Außenschicht als eine flammfeste Außenschicht ausgebildet, welche ein Flammschutzmittel aufweist, wobei das Flammschutzmittel insbesondere aus der Gruppe umfassend Blähgraphit, Borate, Phosphorverbindungen, Aluminiumhydroxide und/oder Antimontrioxid ausgewählt ist.

Insbesondere umfasst die Außenschicht ein Hochtemperatur-AEM und/oder ein Hochtemperatur-ACM. Ein Hochtemperatur-AEM und/oder ein Hochtemperatur-ACM kann hierbei insbesondere Temperaturen von mehr als 150 °C, insbesondere von mehr als 175 °C, insbesondere von mehr als 185 °C widerstehen und stellt somit einen wirksamen Flammschutz für die Fluidleitung 100 bereit.

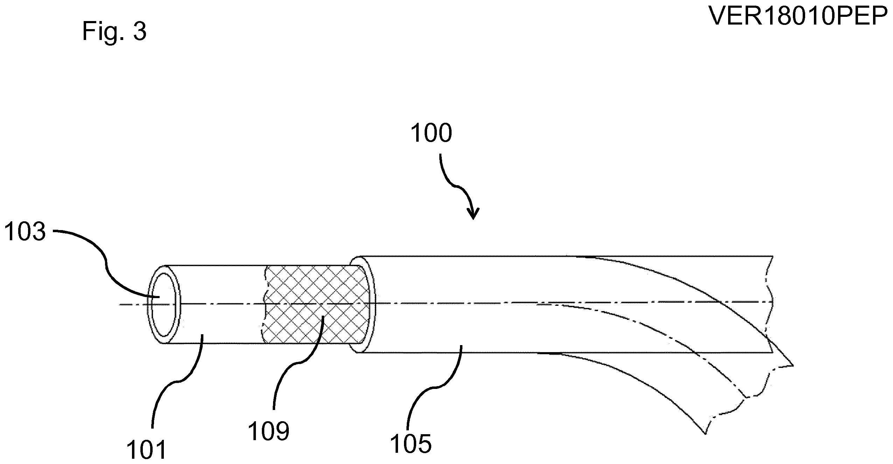

Die Fig. 3 zeigt eine perspektivische Ansicht einer Fluidleitung 100 gemäß einer dritten Ausführungsform.

Die Fluidleitung 100 umfasst eine ein peroxidisch vernetztes thermoplastisches Elastomer-Vulkanisat (TPE-V) umfassende Sperrschicht 101. Die Fluidleitung 100 umfasst ferner eine radial außerhalb der Sperrschicht 101 angeordnete weitere Leitungsschicht 105, wobei die weitere Leitungsschicht 105 insbesondere ein thermoplastisches Elastomer-Vulkanisat (TPE-V) umfasst, insbesondere ein peroxidisch vernetztes thermoplastisches Elastomer-Vulkanisat (TPE-V) oder ein Schwefel-vernetztes thermoplastisches Elastomer-Vulkanisat (TPE-V) oder ein Harz-vernetztes thermoplastisches Elastomer-Vulkanisat (TPE-V) umfasst.

Zwischen der Sperrschicht 101 und der weiteren Leitungsschicht 105 ist ein Festigkeitsträger 109 angeordnet. Ferner kann optional zwischen der Sperrschicht 101 und der weiteren Leitungsschicht 105 eine Zwischenschicht 107 angeordnet sein.

Für weitere Details der Schichten 101, 105, 107, 109 wird auf die Ausführungen in Bezug auf die Figuren 1 und 2 verwiesen.

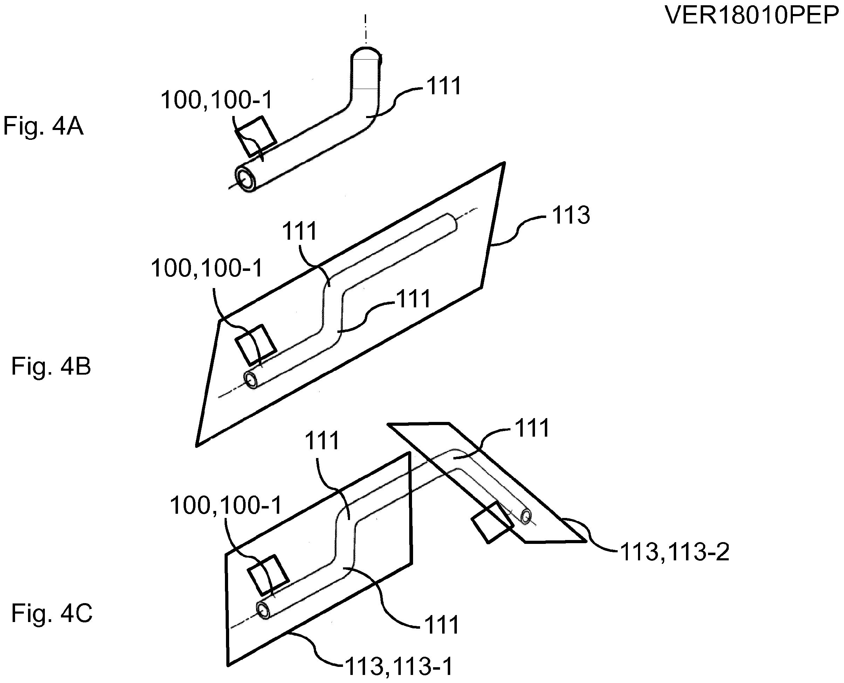

Die Figuren 4A, 4B, 4C zeigen perspektivische Ansichten von als formstabile Formschläuche ausgebildeten Fluidleitungen gemäß verschiedener Ausführungsformen.

Die in den Figuren 4A, 4B und 4C dargestellte Fluidleitung 100 ist hierbei insbesondere jeweils als ein formstabiler Formschlauch 100-1 ausgebildet, welcher insbesondere als ein gekrümmter formstabiler Formschlauch 100-1 ausgebildet ist, wodurch der Formschlauch 100-1 besonders vorteilhaft in einer beengten Bauraumsituation eines Motorraums eines Fahrzeuges verbaut werden kann.

Der in den Figuren 4A, 4B und 4C dargestellte jeweilige formstabile Formschlauch 100-1 kann durch eine Fluidleitung 100 gemäß einer der in den Figuren 1, 2 oder 3 dargestellten Ausführungsformen gebildet sein.

Der in der Fig. 4A dargestellte formstabile Formschlauch 100-1 weist eine einzige Krümmung 111 auf.

Der in Fig. 4B dargestellte formstabile Formschlauch 100-1 weist zwei Krümmungen 111 auf und ist als ein zweidimensional gekrümmter formstabiler Formschlauch 100-1 ausgebildet, wobei sich der zweidimensional gekrümmte formstabile Formschlauch 100-1 in einer einzigen Krümmungsebene 113 erstreckt.

Der in Fig. 4C dargestellte formstabile Formschlauch 100-1 weist eine Mehrzahl von, insbesondere drei, Krümmungen 111 auf und ist als ein dreidimensional gekrümmter formstabiler Formschlauch 100-1 ausgebildet. Der dreidimensional gekrümmte formstabile Formschlauch 100-1 erstreckt sich entlang einer ersten Krümmungsebene 113, 113-1 und entlang einer zweiten Krümmungsebene 113, 113-2, wobei sich die erste Krümmungsebene 113, 113-1 und die zweite Krümmungsebene 113, 113-2 schneiden.

Ein zweidimensional oder dreidimensional gekrümmter formstabiler Formschlauch 100-1 weist insbesondere eine Mehrzahl von Krümmungen 111 auf.

Bei der Herstellung einer als formstabiler Formschlauch 100-1 ausgebildeten Fluidleitung 100 wird ein Schlauchrohling in die gewünschte Form des Formschlauches 100-1 gebogen. Anschließend wird der Schlauchrohling, z.B. durch Thermoformen, in der gewünschten Form fixiert, so dass der formstabile Formschlauch 100-1 erhalten wird. Der formstabile Formschlauch 100-1 weist eine gewisse Flexibilität auf, jedoch kehrt der Formschlauch 100-1 bei einem Verbiegen oder Verdrehen des Formschlauchs 100-1 erneut in die ursprüngliche Form zurück, so dass eine Formstabilität des formstabilen Formschlauchs 100-1 sichergestellt wird.

Durch die Formstabilität des formstabilen Formschlauchs 100-1 wird eine für den Einbau in dem Motorraum des Fahrzeugs vorgesehene, an die jeweilige Bauraumsituation spezifisch angepasste, Form des formstabilen Formschlauchs 100-1 sichergestellt.

Insbesondere kann der formstabile Formschlauch 100-1, bzw. die Fluidleitung 100 als ein Extrusionsformteil geformt sein. Die Sperrschicht 101 und/oder die weitere Leitungsschicht 105, und/oder die Zwischenschicht 107, und/oder die Außenschicht können hierbei insbesondere in separaten Extrusions-Schritten oder in einem gemeinsamen Co-Extrusionsschritt extrudiert werden. Insbesondere können auch nur einige der Schichten, umfassend die Sperrschicht 101, und/oder die weitere Leitungsschicht 105, und/oder die Zwischenschicht 107, und/oder die Außenschicht in einem Co-Extrusionsschritt extrudiert werden.

Auch wenn dies in den Figuren 4A, 4B und 4C der vorliegenden Anmeldung nicht dargestellt ist, kann die Fluidleitung 100 alternativ als ein flexibel verformbarer Wellschlauch ausgebildet sein, welcher im Gegensatz zu einem formstabilen Formschlauch 100-1 keine Formstabilität aufweist. Insbesondere weist die Fluidleitung 100 zumindest einen als formstabilen Formschlauch 100-1 ausgebildeten Abschnitt und zumindest einen als ein flexibel verformbarer Wellschlauch ausgebildeten Abschnitt auf.

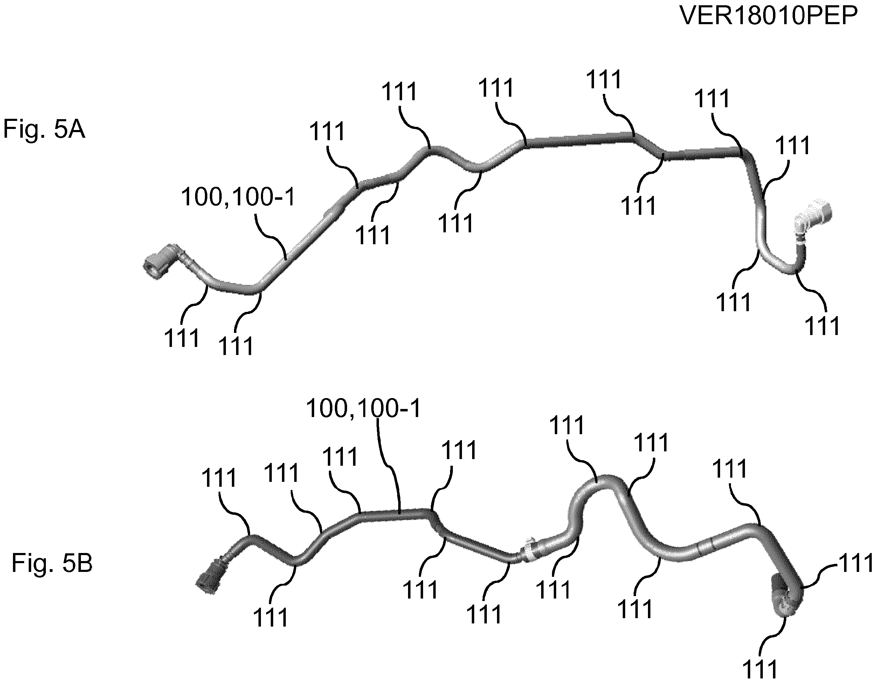

Die Figuren 5A und 5B zeigen perspektivische Ansichten von als formstabile Formschläuche ausgebildeten Fluidleitungen gemäß verschiedener Ausführungsformen.

Die in den Figuren 5A und 5B dargestellten formstabilen Formschläuche 100-1 weisen jeweils eine Mehrzahl von, insbesondere eins, zwei, drei, vier, fünf, sechs, sieben, acht, neun, zehn, elf, zwölf, dreizehn, vierzehn, fünfzehn, sechzehn, oder siebzehn, Krümmungen 111 auf und sind jeweils als ein dreidimensional gekrümmter formstabiler Formschlauch 100-1 ausgebildet. Der dreidimensional gekrümmte jeweilige formstabile Formschlauch 100-1 erstreckt entlang sich einer Vielzahl von unterschiedlichen Krümmungsebenen 113, welche sich schneiden. Um eine übersichtliche Darstellung zur gewährleisten sind die verschiedenen Krümmungsebenen 113 in den Figuren 5A und 5B nicht dargestellt.

Wie in der Fig. 5B dargestellt ist, kann der formstabile Formschlauch 100-1 insbesondere auch aus einzelnen Abschnitten aufgebaut sein, welche miteinander, insbesondere durch eine Schlauchschelle, miteinander verbunden sind.

Für weitere Details hinsichtlich der Formschläuche 100-1 wird auf die Ausführungen zu den Figs. 4A, 4B und 4C verwiesen.

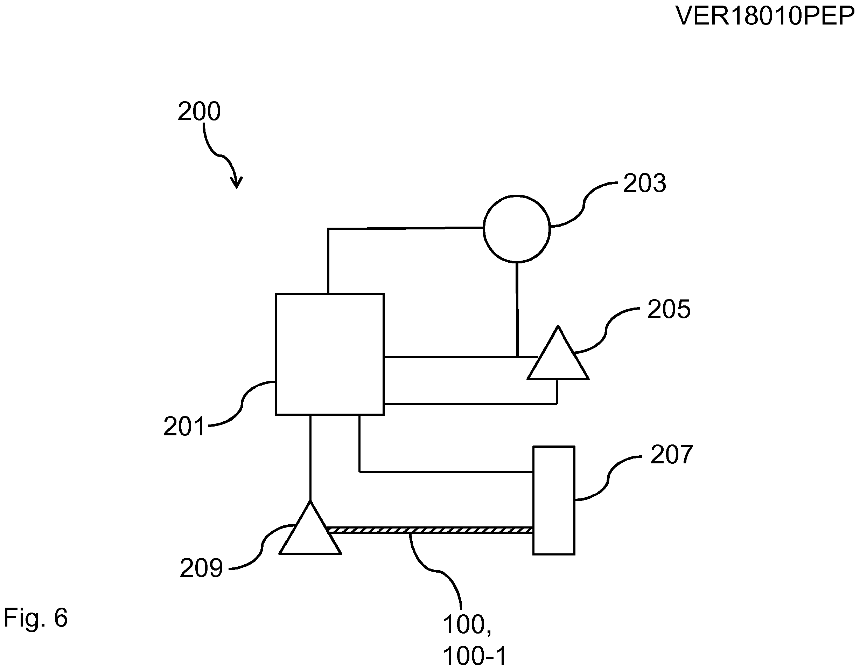

Fig. 6 zeigt eine perspektivische Darstellung einer Leitungsanordnung gemäß einer Ausführungsform.

Die Leitungsanordnung 200 umfasst ein Fahrzeugbauteil 201 und eine Fluidleitung 100, insbesondere ein Formschlauch 100-1, welcher mit dem Fahrzeugbauteil 201 fluidtechnisch verbunden ist. Bis auf die Fluidleitung 100, insbesondere Formschlauch 100-1, sind die weiteren fluidtechnischen Verbindungen der Leitungsanordnung 200 in der Fig. 6 nicht durch Bezugszeichen gekennzeichnet.

Für Details in Bezug auf die Fluidleitung 100, insbesondere Formschlauch 100-1, wird auf die Ausführungen zu den Figuren 1 bis 5 verwiesen.

Das Fahrzeugbauteil 201 umfasst insbesondere eine elektrische Fahrzeugbatterie eines Elektrofahrzeugs, eine Motorkühlvorrichtung zum Kühlen eines Verbrennungsmotors eines Kraftfahrzeugs, eine Temperiervorrichtung zum Temperieren einer elektrischen Fahrzeugbatterie eines Elektrofahrzeugs, einen Wärmetauscher zum Kühlen einer elektrischen Steuerung eines Fahrzeugs, und/oder einen Harnstofftank eines Fahrzeugs.

In der in Fig. 6 dargestellten Ausführungsform umfasst das Fahrzeugbauteil 201 eine Motorkühlvorrichtung zum Kühlen eines Verbrennungsmotors eines Kraftfahrzeuges, welche fluidtechnisch mit einem Ausgleichsbehälter 203 der Leitungsanordnung 200 verbunden ist, und welche fluidtechnisch mit einer Pumpe 205 der Leitungsanordnung 200 zum Pumpen der Kühlflüssigkeit verbunden ist. Insbesondere kann der den Ausgleichsbehälter 203 und die Pumpe 205 umfassende Kreislauf in der Leitungsanordnung 200 nicht vorhanden sein.

Die Leitungsanordnung 200 umfasst ferner einen Wärmetauscher 207 und eine weitere Pumpe 209, wobei die weitere Pumpe 209 ausgebildet ist, Kühlflüssigkeit von dem als Kühlvorrichtung ausgebildeten Fahrzeugbauteil 201 abzuführen und die abgeführte Kühlflüssigkeit dem Wärmetauscher 207 zuzuführen und die dem Wärmetauscher 207 zugeführte Kühlflüssigkeit durch die Fluidleitung 100 wieder dem Fahrzeugbauteil 201 zuzuführen.

In einer in Fig. 6 nicht dargestellten weiteren Ausführungsform umfasst das Fahrzeugbauteil 201 eine Temperiervorrichtung zum Temperieren einer elektrischen Fahrzeugbatterie 207 eines Elektrofahrzeuges. Insbesondere ist das Fahrzeugbauteil 201 fluidtechnisch mit einem Ausgleichsbehälter 203 der Leitungsanordnung 200 verbunden ist, und insbesondere ist das Fahrzeugbauteil 201 fluidtechnisch mit einer Pumpe 205 der Leitungsanordnung 200 zum Pumpen der Kühlflüssigkeit verbunden.

In der in Fig. 6 nicht dargestellten weiteren Ausführungsform umfasst die Leitungsanordnung 200 ferner eine elektrische Fahrzeugbatterie 207 und eine weitere Pumpe 209, wobei die weitere Pumpe 209 ausgebildet ist, Kühlflüssigkeit, insbesondere wässrige Kühlflüssigkeit, von dem als Temperiervorrichtung ausgebildeten Fahrzeugbauteil 201 abzuführen und die abgeführte Kühlflüssigkeit der elektrischen Fahrzeugbatterie 207 zuzuführen und die der elektrischen Fahrzeugbatterie 207 zugeführte Kühlflüssigkeit durch die Fluidleitung 100 wieder dem Fahrzeugbauteil 201 zuzuführen. Insbesondere kann der den Ausgleichsbehälter 203 und die Pumpe 205 umfassende Kreislauf in der Leitungsanordnung 200 nicht vorhanden sein.

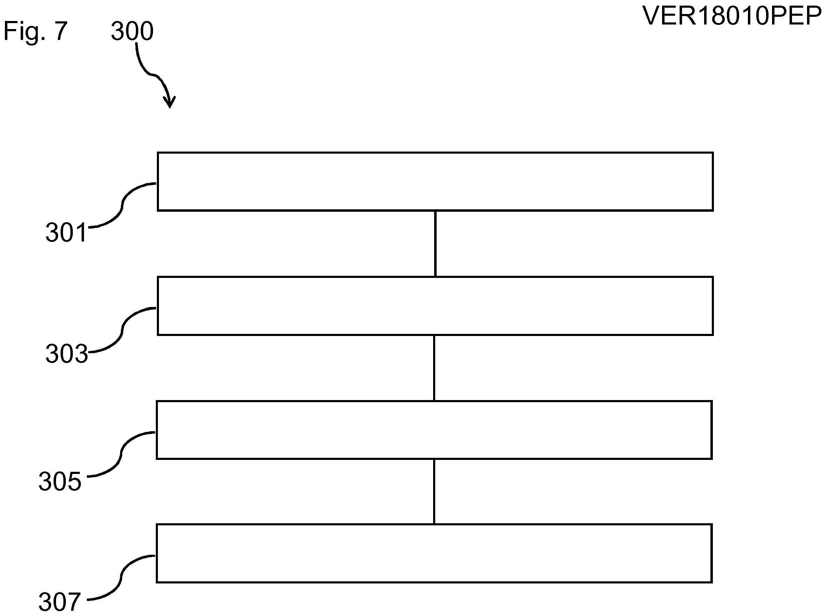

Fig. 7 zeigt eine schematische Darstellung eines Verfahrens zum Herstellen einer Fluidleitung.

Das Verfahren 300 zum Herstellen einer Fluidleitung 100 zum Leiten von Fluid umfasst die folgenden Schritte:
Mischen 301 eines Thermoplast-Kunststoffs, eines Elastomer-Kunststoffs und von Vulkanisationssubstanzen, wobei die Vulkanisationssubstanzen insbesondere ein Peroxid-Derivat und/oder einen Co-Aktivator umfassen, um eine vulkanisierbare Kunststoffmischung zu erhalten.

Vulkanisieren 303 der vulkanisierbaren Kunststoffmischung, um ein Vulkanisat, insbesondere Vulkanisat-Granulat zu erhalten.

Ausbilden 305 der Fluidleitung 100 aus dem Vulkanisat, insbesondere Vulkanisat-Granulat, wobei die Fluidleitung eine Sperrschicht aus peroxidisch vernetztem thermoplastischen Elastomer-Vulkanisat (TPE-V) umfasst.

Hierbei umfasst das Ausbilden 305 der Fluidleitung 100 insbesondere das Extrudieren, insbesondere in einem Extruder, der Fluidleitung 100 aus dem Vulkanisat. Insbesondere werden das Ausbilden 305 der Fluidleitung 100 und das Vulkanisieren 303 der vulkanisierbaren Kunststoffmischung gleichzeitig durchgeführt.

Insbesondere weist die nach dem Vulkanisieren erhaltene Fluidleitung 100 eine Sperrschicht 101 aus peroxidisch vernetztem thermoplastischen Elastomer-Vulkanisat (TPE-V) und eine weitere Leitungsschicht 105 aus Schwefel-vernetztem thermoplastischen Elastomer-Vulkanisat (TPE-V) auf, wobei hierbei die Sperrschicht 101 und die weitere Leitungsschicht 105 insbesondere während eines Co-Extrusions-Verfahrens hergestellt werden. Die Vulkanisationssubstanzen zum Vulkanisieren der weiteren Leitungsschicht 105 umfassen hierbei insbesondere eine Schwefel-Verbindung, einen Katalysator und/oder einen Füllstoff.

An das Ausbilden 305 der Fluidleitung 100 schließt sich insbesondere der weitere optionale Verfahrensschritt an, Formen 307 eines formstabilen Formschlauchs 100-1 aus der Fluidleitung 100, insbesondere durch Thermoformen der Fluidleitung 100.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidleitung
- 100-1: Formstabiler Formschlauch
- 101: Sperrschicht
- 103: Leitungsinnenraum
- 105: Weitere Leitungsschicht
- 107: Zwischenschicht
- 109: Festigkeitsträger
- 111: Krümmung
- 113: Krümmungsebene
- 113-1: Erste Krümmungsebene
- 113-2: Zweite Krümmungsebene
- 200: Leitungsanordnung
- 201: Fahrzeugbauteil
- 203: Ausgleichsbehälter
- 205: Pumpe
- 207: Wärmetauscher
- 209: Weitere Pumpe
- 300: Verfahren zum Herstellen einer Fluidleitung
- 301: Mischen eines Thermoplast-Kunststoffs, eines Elastomer-Kunststoffs und von Vulkanisationssubstanzen, um eine vulkanisierbare Kunststoffmischung zu erhalten
- 303: Vulkanisieren der vulkanisierbaren Kunststoffmischung, um ein Vulkanisat zu erhalten
- 305: Ausbilden der Fluidleitung aus dem Vulkanisat
- 307: Formen eines formstabilen Formschlauchs aus der Fluidleitung

## Patentansprüche

1. Fluidleitung (100) zum Leiten eines Fluids, mit:
einer Sperrschicht (101), welche einen Leitungsinnenraum (103) der Fluidleitung (100) zum Leiten des Fluids begrenzt, wobei die Sperrschicht (101) ausgebildet ist, eine Diffusion des Fluids durch die Sperrschicht (101) zu reduzieren,
wobei die Sperrschicht (101) ein peroxidisch vernetztes thermoplastisches Elastomer-Vulkanisat (TPE-V) umfasst,
wobei die Fluidleitung (100) eine weitere Leitungsschicht (105) aufweist, welche radial außerhalb der Sperrschicht (101) angeordnet ist, wobei die weitere Leitungsschicht (105) ein peroxidisch vernetztes thermoplastisches Elastomer-Vulkanisat (TPE-V) oder ein Schwefel-vernetztes thermoplastisches Elastomer-Vulkanisat (TPE-V) oder ein Harz-vernetztes thermoplastisches Elastomer-Vulkanisat (TPE-V) umfasst.

2. Fluidleitung (100) nach Anspruch 1, wobei das peroxidisch vernetzte thermoplastische Elastomer-Vulkanisat (TPE-V) der Sperrschicht (101) und/oder der weiteren Leitungsschicht (105) eine Mischung aus Polyamid (PA) oder Polyolefin, insbesondere Polypropylen (PP) oder Polyethylen (PE), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Ethylen-Vinylacetat-Kautschuk (EVM) umfasst.

3. Fluidleitung (100) nach einem der vorangehenden Ansprüche, wobei das peroxidisch vernetzte thermoplastische Elastomer-Vulkanisat (TPE-V) der Sperrschicht (101) und/oder der weiteren Leitungsschicht (105) ein Peroxid-Derivat, und/oder einen Co-Aktivator umfasst,
wobei das Peroxid-Derivat insbesondere ein Alkyl-Aralkyl-Peroxid-Derivat, ein Diaralkyl-Peroxid-Derivat, ein Peroxyketal-Derivat und/oder ein Peroxyester-Derivat umfasst, und/oder
wobei der Co-Aktivator insbesondere Triallylcyanurat (TAC), Triallylisocyanurat (TAIC), Trimethylolpropan-trimethacrylat (TRIM), Dimethylacrylat, Trimethylacrylat, Triazin und/oder Bismaleinimid umfasst.

4. Fluidleitung (100) nach einem der vorangehenden Ansprüche 1 bis 3, wobei das Schwefel- oder Harz- vernetzte thermoplastische Elastomer-Vulkanisat (TPE-V) der weiteren Leitungsschicht (105) eine Mischung aus Polyamid (PA) oder Polyolefin, insbesondere Polypropylen (PP) oder Polyethylen (PE), mit Ethylen-Propylen-Dien-Kautschuk (EPDM), Isobuten-Isopren-Kautschuk, Acrylnitrilbutadien-Kautschuk (NBR), hydriertem Acrylnitrilbutadien-Kautschuk (HNBR), und/oder Acrylat-Kautschuk (ACM) umfasst.

5. Fluidleitung (100) nach einem der vorangehenden Ansprüche 1 bis 4, wobei das Schwefel-vernetzte thermoplastische Elastomer-Vulkanisat (TPE-V) der weiteren Leitungsschicht (105) eine Schwefel-Verbindung, einen Katalysator und/oder einen Füllstoff umfasst,
wobei die Schwefel-Verbindung insbesondere molekularen Schwefel und/oder Dischwefeldichlorid umfasst,
wobei der Katalysator insbesondere 2-Mercaptobenzothiazol, Tetramethylthiuramdisulfid, N-Cyclohexyl-2-benzothiazolsulfenamid (CBS), N,N-Dicyclohexyl-2-benzothiazolsulfenamid (DCBS), Zinkdiethyldithiocarbamat (ZDEC), Zinkdibuthyldithiocarbamat (ZDBC), Tetramethylthioperoxydicarbondiamid (TMTD) und/oder Fettsäuren umfasst, und/oder
wobei der Füllstoff Ruß, Metalloxid, insbesondere Magnesiumoxid und/oder Zinkoxid, Magnesiumcarbonat, Kieselsäure, Calciumsilikat, Aluminiumsilikat, Kreide, Kieselgur, Tonerde-Gel, Asphalt, Hartgummistaub, anorganische und organische Pigmente, Kautschukgel, *syn*-1,2-Polybutadien, *trans*-1,4-Polybutadien, PTFE, und/oder Polyethylen umfasst.

6. Fluidleitung (100) nach einem der vorangehenden Ansprüche 1 bis 4, wobei das Harz-vernetzte thermoplastische Elastomer-Vulkanisat (TPE-V) der weiteren Leitungsschicht (105) eine Harz-Verbindung und/oder einen weiteren Katalysator umfasst,
wobei die Harz-Verbindung insbesondere ein Resolharz, insbesondere ein bromiertes oder chloriertes Resolharz umfasst, und/oder
wobei der weitere Katalysator insbesondere Zinkoxid, Magnesiumoxid und/oder Zinnchlorid umfasst.

7. Fluidleitung (100) nach einem der vorangehenden Ansprüche, wobei die Fluidleitung (100) zumindest einen Festigkeitsträger (109) umfasst, welcher insbesondere in der Sperrschicht (101), oder zwischen der Sperrschicht (101) und der weiteren Leitungsschicht (105), oder radial außerhalb der weiteren Leitungsschicht (105) angeordnet ist, und/oder wobei die Fluidleitung (100) eine Zwischenschicht (107) aufweist, welche zwischen der Sperrschicht (101) und der weiteren Leitungsschicht (105) angeordnet ist, wobei der Festigkeitsträger (109) insbesondere in der Zwischenschicht (107) aufgenommen ist.

8. Fluidleitung (100) nach einem der vorangehenden Ansprüche, wobei die Fluidleitung (100) eine Außenschicht aufweist, welche insbesondere radial außerhalb der Sperrschicht (101), radial außerhalb der weiteren Leitungsschicht (105), radial außerhalb der Zwischenschicht (107) und/oder radial außerhalb des Festigkeitsträgers (109) angeordnet ist.

9. Fluidleitung (100) nach einem der vorangehenden Ansprüche, wobei die Fluidleitung (100) als ein formstabiler Formschlauch (100-1) ausgebildet ist, wobei der Formschlauch (100-1) insbesondere einen zweidimensional oder dreidimensional gekrümmten Verlauf aufweist, oder
wobei die Fluidleitung (100) als ein flexibel verformbarer Wellschlauch ausgebildet ist, oder
wobei die Fluidleitung (100) zumindest einen als formstabilen Formschlauch (100-1) ausgebildeten Abschnitt und zumindest einen als ein flexibel verformbarer Wellschlauch ausgebildeten Abschnitt aufweist.

10. Fluidleitung (100) nach Anspruch 9, wobei der formstabile Formschlauch (100-1) als ein thermogeformter formstabiler Formschlauch (100-1) ausgebildet ist.

11. Verfahren (300) zum Herstellen einer Fluidleitung (100) zum Leiten von Fluid, wobei das Verfahren (300) die folgenden Schritte umfasst:
Mischen (301) eines Thermoplast-Kunststoffs, eines Elastomer-Kunststoffs und von Vulkanisationssubstanzen, wobei die Vulkanisationssubstanzen insbesondere ein Peroxid-Derivat und/oder einen Co-Aktivator umfassen, um eine vulkanisierbare Kunststoffmischung zu erhalten;
Vulkanisieren (303) der vulkanisierbaren Kunststoffmischung, um ein Vulkanisat, insbesondere Vulkanisat-Granulat, zu erhalten;
Ausbilden (305) der Fluidleitung (100) aus dem Vulkanisat, insbesondere Vulkanisat-Granulat, wobei die Fluidleitung (100) eine Sperrschicht (101) aus peroxidisch vernetztem thermoplastischen Elastomer-Vulkanisat (TPE-V) umfasst, wobei die Fluidleitung (100) eine weitere Leitungsschicht (105) aufweist, welche radial außerhalb der Sperrschicht (101) angeordnet ist, wobei die weitere Leitungsschicht (105) ein peroxidisch vernetztes thermoplastisches Elastomer-Vulkanisat (TPE-V) oder ein Schwefel-vernetztes thermoplastisches Elastomer-Vulkanisat (TPE-V) oder ein Harz-vernetztes thermoplastisches Elastomer-Vulkanisat (TPE-V) umfasst.

12. Verfahren (300) nach Anspruch 11, wobei das Ausbilden (305) der Fluidleitung (100) aus dem Vulkanisat, insbesondere Vulkanisat-Granulat, das Extrudieren des Vulkanisats mit einem Extruder umfasst, wobei das Ausbilden (305) der Fluidleitung (100) und das Vulkanisieren (303) der vulkanisierbaren Kunststoffmischung insbesondere gleichzeitig durchgeführt werden.

13. Verfahren (300) nach Anspruch 11 oder 12, wobei sich an das Ausbilden (305) der Fluidleitung (100) der weitere Verfahrensschritt anschließt, Formen (307) eines formstabilen Formschlauchs (100-1) aus der Fluidleitung (100), insbesondere durch Thermoformen der Fluidleitung (100).

14. Leitungsanordnung (200) mit einem Fahrzeugbauteil (201) und mit einer Fluidleitung (100) nach einem der Ansprüche 1 bis 10, wobei die Fluidleitung (100) mit dem Fahrzeugbauteil (201) fluidtechnisch verbunden ist, wobei das Fahrzeugbauteil (201) insbesondere eine elektrische Fahrzeugbatterie eines Elektrofahrzeuges, eine Motorkühlvorrichtung zum Kühlen eines Verbrennungsmotors eines Kraftfahrzeuges, eine Temperiervorrichtung zum Temperieren einer elektrischen Fahrzeugbatterie, einen Wärmetauscher zum Kühlen einer elektrischen Steuerung eines Fahrzeugs, und/oder einen Harnstofftank eines Fahrzeugs umfasst.

## Claims

1. Fluid conductor (100) for conducting a fluid, comprising:
a barrier layer (101) which limits a conductor interior (103) of the fluid conductor (100) for conducting the fluid, wherein the barrier layer (101) is configured to reduce a diffusion of the fluid through the barrier layer (101),
wherein the barrier layer (101) comprises a peroxide crosslinked thermoplastic elastomer vulcanizate (TPE-V),
wherein the fluid conductor (100) comprises a further conductor layer (105) which is arranged radially outside of the barrier layer (101), wherein the further conductor layer (105) comprises a peroxide crosslinked thermoplastic elastomer vulcanizate (TPE-V) or a sulfur-crosslinked thermoplastic elastomer vulcanizate (TPE-V) or a resin-crosslinked thermoplastic elastomer vulcanizate (TPE-V).

2. Fluid conductor (100) according to claim 1, wherein the peroxide crosslinked thermoplastic elastomer vulcanizate (TPE-V) of the barrier layer (101) and/or the further conductor layer (105) comprises a mixture of polyamide (PA) or polyolefin, in particular polypropylene (PP) or polyethylene (PE), with ethylene-propylene diene rubber (EPDM), isobutene-isoprene rubber, acrylonitrile butadiene rubber (NBR), hydrogenated acrylonitrile butadiene rubber (HNBR), and/or ethylene-vinyl acetate rubber (EVM).

3. Fluid conductor (100) according to one of the preceding claims, wherein the peroxide crosslinked thermoplastic elastomer vulcanizate (TPE-V) of the barrier layer (101) and/or the further conductor layer (105) comprises a peroxide derivative, and/or a co-activator,
wherein the peroxide derivative in particular comprises an alkyl aralkyl peroxide derivative, a diaaralkyl peroxide derivative, a peroxyketal derivative and/or a peroxyester derivative, and/or
wherein the co-activator in particular comprises triallylcyanurate (TAC), triallylisocyanurate (TAIC), trimethylolpropane trimethacrylate (TRIM), dimethyl acrylate, trimethyl acrylate, triazine and/or bismaleimide.

4. Fluid conductor (100) according to one of the preceding claims 1 to 3, wherein the sulfur- or resin-crosslinked thermoplastic elastomer vulcanizate (TPE-V) of the further conductor layer (105) comprises a mixture of polyamide (PA) or polyolefin, in particular polypropylene (PP) or polyethylene (PE), with ethylene-propylene-diene rubber (EPDM), isobutene-isoprene rubber, acrylonitrile butadiene rubber (NBR), hydrogenated acrylonitrile butadiene rubber (HNBR), and/or acrylate rubber (ACM).

5. Fluid conductor (100) according to one of the preceding claims 1 to 4, wherein the sulfur-crosslinked thermoplastic elastomer vulcanizate (TPE-V) of the further conductor layer (105) comprises a sulfur compound, a catalyst and/or a filler,
wherein the sulfur compound in particular comprises molecular sulfur and/or disulfide dichloride,
wherein the catalyst in particular comprises 2-mercaptobenzothiazole, tetramethylthiuram disulfide, N-cyclohexyl-2-benzothiazole sulfenamide (CBS), N,N-dicyclohexyl-2-benzothiazole sulfenamide (DCBS), zinc diethyldithiocarbamate (ZDEC), zinkdibuthyldithiocarbamat (ZDBC), tetramethylthioperoxydicarbondiamid (TMTD) and/or fatty acids, and/or
wherein the filler comprises carbon black, metal oxide, in particular magnesium oxide and/or zinc oxide, magnesium carbonate, silicic acid, calcium silicate, aluminum silicate, chalk, diatomaceous earth, clay gel, asphalt, hard rubber dust, inorganic and organic pigments, rubber gel, syn-1,2-polybutadiene, *trans-*1,4-polybutadiene, PTFE, and/or polyethylene.

6. Fluid conductor (100) according to one of the preceding claims 1 to 4, wherein the resin-crosslinked thermoplastic elastomer vulcanizate (TPE-V) of the further conductor layer (105) comprises a resin compound and/or a further catalyst,
wherein the resin compound in particular comprises a resol resin, in particular a brominated or chlorinated resol resin, and/or
wherein the further catalyst in particular comprises zinc oxide, magnesium oxide and/or tin chloride.

7. Fluid conductor (100) according to one of the preceding claims, wherein the fluid conductor (100) comprises at least one reinforcing carrier (109), which is in particular arranged in the barrier layer (101), or between the barrier layer (101) and the further conductor layer (105), or radially outside of the further conductor layer (105), and/or wherein the fluid conductor (100) comprises an intermediate layer (107) which is arranged between the barrier layer (101) and the further conductor layer (105), wherein the reinforcing carrier (109) in particular is received in the intermediate layer (107).

8. Fluid conductor (100) according to one of the preceding claims, wherein the fluid conductor (100) comprises an outer layer, which is in particular arranged radially outside of the barrier layer (101), radially outside of the further conductor layer (105), radially outside of the intermediate layer (107) and/or radially outside of the reinforcing carrier (109).

9. Fluid conductor (100) according to one of the preceding claims, wherein the fluid conductor (100) is formed as a preformed hose (100-1) stable in form, wherein the preformed hose (100-1) in particular comprises a two-dimensional or three-dimensionally curved course, or
wherein the fluid conductor (100) is formed as a flexibly deformable corrugated hose, or
wherein the fluid conductor (100) comprises at least one section formed as a preformed hose (100-1) stable in form and at least one section formed as a flexibly deformable corrugated hose.

10. Fluid conductor (100) according to claim 9, wherein the preformed hose (100-1) stable in form is formed as a thermoformed preformed hose (100-1) stable in form.

11. Method (300) for manufacturing a fluid conductor (100) for conducting fluid, wherein the method (300) comprises the following steps:
mixing (301) a thermoplastic plastic, an elastomeric plastic and vulcanization substances, wherein the vulcanization substances in particular comprise a peroxide derivative and/or a co-activator in order to obtain a vulcanizable plastic mixture;
vulcanizing (303) the vulcanizable plastic mixture to obtain a vulcanizate, in particular vulcanizate granulate;
forming (305) the fluid conductor (100) from the vulcanizate, in particular vulcanizate granulate, wherein the fluid conductor (100) comprises a barrier layer (101) of peroxide crosslinked thermoplastic elastomer vulcanizate (TPE-V),
wherein the fluid conductor (100) comprises a further conductor layer (105) which is arranged radially outside of the barrier layer (101), wherein the further conductor layer (105) comprises a peroxide crosslinked thermoplastic elastomer vulcanizate (TPE-V) or a sulfur-crosslinked thermoplastic elastomer vulcanizate (TPE-V) or a resin-crosslinked thermoplastic elastomer vulcanizate (TPE-V).

12. Method (300) according to claim 11, wherein the forming (305) of the fluid conductor (100) from the vulcanizate, in particular vulcanizate granulate, comprises extruding the vulcanizate with an extruder, wherein the forming (305) of the fluid conductor (100) and the vulcanizing (303) of the vulcanizable plastic mixture is in particular performed simultaneously.

13. Method (300) according to claim 11 or 12, wherein the further method step, forming (307) a preformed hose (100-1) stable in form from the fluid conductor (100), in particular by thermoforming the fluid conductor (100), follows the forming (305) of the fluid conductor (100).

14. Conductor arrangement (200) comprising a vehicle component (201) and a fluid conductor (100) according to one of claims 1 to 10, wherein the fluid conductor (100) is fluidly connected with the vehicle component (201), wherein the vehicle component (201) in particular comprises an electric vehicle battery of an electric vehicle, an engine cooling device for cooling a combustion engine of a motor vehicle, a temperature control device for tempering an electric vehicle battery, a heat exchanger for cooling an electrical control of a vehicle, and/or an urea tank of a vehicle.

## Revendications

1. Conduite à fluide (100) pour la conduite d'un fluide, comportant :
une couche barrière (101), qui délimite un espace intérieur de conduite (103) de la conduite à fluide (100) pour la conduite du fluide, la couche barrière (101) étant conçue pour réduire la diffusion du fluide à travers la couche barrière (101),
la couche barrière (101) comprenant un vulcanisat d'élastomère thermoplastique (TPE-V) réticulé de manière peroxydique,
la conduite à fluide (100) présentant une couche de conduite supplémentaire (105), qui est disposée radialement à l'extérieur de la couche barrière (101),
la couche de conduite supplémentaire (105) comprenant un vulcanisat d'élastomère thermoplastique (TPE-V) réticulé de manière peroxydique ou un vulcanisat d'élastomère thermoplastique (TPE-V) réticulé par du soufre ou un vulcanisat d'élastomère thermoplastique (TPE-V) réticulé par une résine.

2. Conduite à fluide (100) selon la revendication 1, le vulcanisat d'élastomère thermoplastique (TPE-V) réticulé de manière peroxydique de la couche barrière (101) et/ou de la couche de conduite supplémentaire (105) comprenant un mélange de polyamide (PA) ou de polyoléfine, en particulier de polypropylène (PP) ou de polyéthylène (PE), avec un caoutchouc d'éthylènepropylène-diène (EPDM), un caoutchouc d'isobutèneisoprène, un caoutchouc d'acrylonitrile-butadiène (NBR), un caoutchouc d'acrylonitrile-butadiène hydrogéné (HNBR), et/ou un caoutchouc d'éthylèneacétate de vinyle (EVM).

3. Conduite à fluide (100) selon l'une quelconque des revendications précédentes, le vulcanisat d'élastomère thermoplastique (TPE-V) réticulé de manière peroxydique de la couche barrière (101) et/ou de la couche de conduite supplémentaire (105) comprenant un dérivé de peroxyde, et/ou un co-activateur,
le dérivé de peroxyde comprenant en particulier un dérivé de peroxyde d'alkyl-aralkyle, un dérivé de peroxyde de diaralkyle, un dérivé de peroxycétal et/ou un dérivé de peroxyester, et/ou
le co-activateur comprenant en particulier le cyanurate de triallyle (TAC), l'isocyanurate de triallyle (TAIC), le triméthacrylate de triméthylolpropane (TRIM), un diméthylacrylate, un triméthylacrylate, une triazine et/ou un bismaléinidimide.

4. Conduite à fluide (100) selon l'une quelconque des revendications précédentes 1 à 3, le vulcanisat d'élastomère thermoplastique (TPE-V) réticulé par du soufre ou par une résine de la couche de conduite supplémentaire (105) comprenant un mélange de polyamide (PA) ou de polyoléfine, en particulier de polypropylène (PP) ou de polyéthylène (PE), avec un caoutchouc d'éthylène-propylène-diène (EPDM), un caoutchouc d'isobutène-isoprène, un caoutchouc d'acrylonitrilebutadiène (NBR), un caoutchouc d'acrylonitrilebutadiène hydrogéné (HNBR), et/ou un caoutchouc d'acrylate (ACM).

5. Conduite à fluide (100) selon l'une quelconque des revendications précédentes 1 à 4, le vulcanisat d'élastomère thermoplastique (TPE-V) réticulé par du soufre de la couche de conduite supplémentaire (105) comprenant un composé du soufre, un catalyseur et/ou une charge,
le composé du soufre comprenant en particulier du soufre moléculaire et/ou du dichlorure de disoufre,
le catalyseur comprenant en particulier le 2-mercaptobenzothiazole, le disulfure de tétraméthylthiurame, le N-cyclohexyl-2-benzothiazolsulfénamide (CBS), le N,N-dicyclohexyl-2-benzothiazolsulfénamide (DCBS), le diéthyldithiocarbamate de zinc (ZDEC), le dibutyldithiocarbamate de zinc (ZDBC), le tétraméthylthioperoxydicarboxydiamide (TMTD) et/ou des acides gras, et/ou
la charge comprenant la suie, un oxyde métallique, en particulier l'oxyde de magnésium et/ou l'oxyde de zinc, le carbonate de magnésium, l'acide silicique, le silicate de calcium, le silicate d'aluminium, la craie, la diatomite, un gel d'argile, un asphalte, de la poussière de caoutchouc dur, des pigments inorganiques et organiques, un gel de caoutchouc, un *syn*-1,2-polybutadiène, un trans-1,4-polybutadiène, un PTFE, et/ou un polyéthylène.

6. Conduite à fluide (100) selon l'une quelconque des revendications précédentes 1 à 4, le vulcanisat d'élastomère thermoplastique (TPE-V) réticulé par une résine de la couche de conduite supplémentaire (105) comprenant un composé de résine et/ou un catalyseur supplémentaire,
le composé de résine comprenant en particulier une résine de résol, en particulier une résine de résol bromée ou chlorée, et/ou
le catalyseur supplémentaire comprenant en particulier de l'oxyde de zinc, de l'oxyde de magnésium et/ou du chlorure d'étain.

7. Conduite à fluide (100) selon l'une quelconque des revendications précédentes, la conduite à fluide (100) comprenant au moins un support de renforcement (109), qui est disposé en particulier dans la couche barrière (101), ou entre la couche barrière (101) et la couche de conduite supplémentaire (105), ou radialement à l'extérieur de la couche de conduite supplémentaire (105), et/ou
la conduite à fluide (100) présentant une couche intermédiaire (107), qui est disposée entre la couche barrière (101) et la couche de conduite supplémentaire (105), le support de renforcement (109) étant en particulier intégré dans la couche intermédiaire (107).

8. Conduite à fluide (100) selon l'une quelconque des revendications précédentes, la conduite à fluide (100) présentant une couche externe, qui est disposée en particulier radialement à l'extérieur de la couche barrière (101), radialement à l'extérieur de la couche de conduite supplémentaire (105), radialement à l'extérieur de la couche intermédiaire (107) et/ou radialement à l'extérieur du support de renforcement (109) .

9. Conduite à fluide (100) selon l'une quelconque des revendications précédentes, la conduite à fluide (100) étant réalisée comme un tuyau moulé dimensionnellement stable (100-1), le tuyau moulé (100-1) présentant en particulier un tracé incurvé bidimensionnellement ou tridimensionnellement, ou
la conduite à fluide (100) étant réalisée comme un tuyau ondulé déformable de manière flexible, ou
la conduite à fluide (100) présentant au moins une section formée comme un tuyau moulé dimensionnellement stable (100-1) et au moins une section formée comme un tuyau ondulé déformable de manière flexible.

10. Conduite à fluide (100) selon la revendication 9, le tuyau moulé dimensionnellement stable (100-1) étant réalisé comme un tuyau moulé dimensionnellement stable (100-1) thermoformé.

11. Procédé (300) pour la fabrication d'une conduite à fluide (100) pour la conduite de fluide, le procédé (300) comprenant les étapes suivantes :
mélange (301) d'un plastique thermoplastique, d'un plastique élastomérique et de substances de vulcanisation, les substances de vulcanisation comprenant en particulier un dérivé de peroxyde et/ou un co-activateur, pour obtenir un mélange de plastiques vulcanisable ;
vulcanisation (303) du mélange de plastiques vulcanisable, pour obtenir un vulcanisat, en particulier un granulé de vulcanisat ;
formation (305) de la conduite à fluide (100) à partir du vulcanisat, en particulier du granulé de vulcanisat, la conduite à fluide (100) comprenant une couche barrière (101) comprenant un vulcanisat d'élastomère thermoplastique (TPE-V) réticulé de manière peroxydique,
la conduite à fluide (100) présentant une couche de conduite supplémentaire (105), qui est disposée radialement à l'extérieur de la couche barrière (101), la couche de conduite supplémentaire (105) comprenant un vulcanisat d'élastomère thermoplastique (TPE-V) réticulé de manière peroxydique ou un vulcanisat d'élastomère thermoplastique (TPE-V) réticulé par du soufre ou un vulcanisat d'élastomère thermoplastique (TPE-V) réticulé par une résine.

12. Procédé (300) selon la revendication 11, la formation (305) de la conduite à fluide (100) à partir du vulcanisat, en particulier du granulé de vulcanisat, comprenant l'extrusion du vulcanisat avec une extrudeuse, la formation (305) de la conduite à fluide (100) et la vulcanisation (303) du mélange de plastiques vulcanisable étant en particulier mises en œuvre simultanément.

13. Procédé (300) selon la revendication 11 ou 12, l'étape de procédé supplémentaire de moulage (307) d'un tuyau moulé dimensionnellement stable (100-1), à partir de la conduite à fluide (100), en particulier par thermoformage de la conduite à fluide (100), suivant la formation (305) de la conduite à fluide (100).

14. Agencement de conduite (200) avec un composant de véhicule (201) et une conduite à fluide (100) selon l'une quelconque des revendications 1 à 10, la conduite à fluide (100) étant reliée fluidiquement avec le composant de véhicule (201), le composant de véhicule (201) comprenant en particulier une batterie de véhicule électrique d'un véhicule électrique, un dispositif de refroidissement de moteur pour le refroidissement d'un moteur à combustion d'un véhicule à moteur, un dispositif d'équilibrage de température pour l'équilibrage de température d'une batterie de véhicule électrique, un échangeur de chaleur pour le refroidissement d'une commande électrique d'un véhicule, et/ou un réservoir d'urée d'un véhicule.
